(19) Europäisches Patentamt
European Patent Office
Office européen des brevets

(11) **EP 4 708 860 A1**

(12) **EUROPEAN PATENT APPLICATION**
published in accordance with Art. 153(4) EPC

(43) Date of publication:
**11.03.2026 Bulletin 2026/11**

(21) Application number: **24814550.0**

(22) Date of filing: **30.05.2024**

(51) International Patent Classification (IPC):
**H04N 19/44** *(2014.01)*

(52) Cooperative Patent Classification (CPC):
**H04N 19/124; H04N 19/44; H04N 19/91;
H04N 21/44; H04N 21/466**

(86) International application number:
**PCT/CN2024/096404**

(87) International publication number:
**WO 2024/245354 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.06.2023 CN 202310645218**

(71) Applicant: **Hangzhou Hikvision Digital
Technology Co., Ltd.
Hangzhou, Zhejiang 310051 (CN)**

(72) Inventors:
• **CHEN, Fangdong
Hangzhou, Zhejiang 310051 (CN)**

• **YE, Zongmiao
Hangzhou, Zhejiang 310051 (CN)**
• **WANG, Li
Hangzhou, Zhejiang 310051 (CN)**
• **WU, Xiaoyang
Hangzhou, Zhejiang 310051 (CN)**
• **LU, Ming
Hangzhou, Zhejiang 310051 (CN)**
• **KONG, Yuzhuo
Hangzhou, Zhejiang 310051 (CN)**
• **MA, Zhan
Hangzhou, Zhejiang 310051 (CN)**

(74) Representative: **Goddar, Heinz J.
Boehmert & Boehmert
Anwaltspartnerschaft mbB
Pettenkoferstrasse 22
80336 München (DE)**

(54) **DECODING AND ENCODING METHOD, APPARATUS, AND DEVICE THEREOF**

(57) The present application provides a decoding and encoding method, an apparatus, and a device thereof. The decoding method comprises: decoding a code stream corresponding to a current image block to obtain coefficient hyperparametric features; on the basis of the coefficient hyperparametric features, determining probability distribution parameters, and on the basis of the probability distribution parameters, decoding another stream of the current image block to obtain reconstructed features; inputting the reconstructed features into a synthetic transformation network to obtain reconstructed image blocks; wherein the synthetic transformation network comprises an attention module, and the attention module is a cascaded mixed attention module; the cascaded mixed attention module comprises a first attention submodule and a second attention submodule, and the first attention submodule and the second attention submodule are connected in series.

Decode a bitstream corresponding to a current picture block, to obtain a coefficient hyperparameter feature corresponding to the current picture block — 301

Determine a probability distribution parameter based on the coefficient hyperparameter feature, and decode another bitstream corresponding to the current picture block based on the probability distribution parameter to obtain a reconstructed feature corresponding to the current picture block — 302

Input the reconstructed feature into a synthetic transform network to obtain a reconstructed picture block corresponding to the current picture block; where the synthetic transform network at least includes an attention module, and the attention module may be a cascaded hybrid attention module — 303

FIG. 3

## Description

## TECHNICAL FIELD

This disclosure relates to the field of encoding and decoding technologies, and in particular, to a decoding method, an encoding method, an apparatus, and a device thereof.

## BACKGROUND

In order to achieve the purpose of saving space, video pictures are transmitted after being coded, and complete video coding may include processes such as prediction, transform, quantization, entropy coding, and filtering. For the prediction process, prediction may include intra prediction and inter prediction, and the inter prediction refers to predicting a current pixel by using pixels of adjacent coded pictures based on a correlation in a video time domain, to effectively remove video time domain redundancy. The intra prediction refers to predicting a current pixel by using pixels of coded blocks of a current picture based on a correlation in a video space domain, to remove video space domain redundancy.

With the rapid development of deep learning, the deep learning is successful in many high-level computer vision problems, such as picture classification and target detection, and the deep learning is gradually applied in the field of encoding and decoding, that is, the neural network can be used to encode and decode pictures. Although the neural network-based encoding and decoding method shows great performance potential, the neural network-based encoding and decoding method still has problems such as poor decoding performance and high complexity.

## SUMMARY

This disclosure provides a decoding method, an encoding method, an apparatus, and a device thereof, to improve decoding performance and reduce complexity.

The present disclosure provides a decoding method, applied to a decoder, including: decoding a bitstream corresponding to a current picture block to obtain a coefficient hyperparameter feature corresponding to the current picture block, determining a probability distribution parameter based on the coefficient hyperparameter feature, and decoding another bitstream corresponding to the current picture block based on the probability distribution parameter to obtain a reconstructed feature corresponding to the current picture block; and inputting the reconstructed feature into a synthetic transform network to obtain a reconstructed picture block corresponding to the current picture block; where the synthetic transform network at least includes an attention module, and the attention module is a cascaded hybrid attention module; and where the cascaded hybrid attention module includes a first attention sub-module and a second attention sub-module which are two sub-modules connected in series.

The present disclosure provides an encoding method, applied to an encoder, including: decoding a bitstream corresponding to a current picture block to obtain a coefficient hyperparameter feature corresponding to the current picture block, determining a probability distribution parameter based on the coefficient hyperparameter feature, and decoding another bitstream corresponding to the current picture block based on the probability distribution parameter to obtain a reconstructed feature corresponding to the current picture block; and inputting the reconstructed feature into a synthetic transform network to obtain a reconstructed picture block corresponding to the current picture block; where the synthetic transform network at least includes an attention module, and the attention module is a cascaded hybrid attention module; where the cascaded hybrid attention module includes a first attention sub-module and a second attention sub-module which are two sub-modules connected in series.

The present disclosure provides a decoding apparatus, applied to a decoder, including: a decoding module, configured to: decode a bitstream corresponding to a current picture block to obtain a coefficient hyperparameter feature corresponding to the current picture block, determine a probability distribution parameter based on the coefficient hyperparameter feature, and decode another bitstream corresponding to the current picture block based on the probability distribution parameter to obtain a reconstructed feature corresponding to the current picture block; and a processing module, configured to input the reconstructed feature into a synthetic transform network to obtain a reconstructed picture block corresponding to the current picture block; where the synthetic transform network at least includes an attention module, and the attention module is a cascaded hybrid attention module; where the cascaded hybrid attention module includes a first attention sub-module and a second attention sub-module which are two sub-modules connected in series.

The present disclosure provides an encoding apparatus, applied to an encoder, including: a decoding module, configured to: decode a bitstream corresponding to a current picture block to obtain a coefficient hyperparameter feature corresponding to the current picture block, determine a probability distribution parameter based on the coefficient hyperparameter feature, and decode another bitstream corresponding to the current picture block based on the probability distribution parameter to obtain a reconstructed feature corresponding to the current picture block; and a processing module, configured to input the reconstructed feature into a synthetic transform network to obtain a reconstructed picture block corresponding to the current picture block; where the synthetic transform network at least includes an attention module, and the attention module is a cascaded hybrid attention module; where the cascaded hybrid attention module includes a first attention sub-module and a second attention sub-module which are two sub-modules connected in series.

The present disclosure provides a decoding device, including: one or more processors and a machine-readable storage medium, where the machine-readable storage medium stores machine-executable instructions executable by the one or more processors; and the one or more processors are configured to execute the machine-executable instructions to implement the decoding method described above.

The present disclosure provides an encoding device, including: one or more processors and a machine-readable storage medium, where the machine-readable storage medium stores machine-executable instructions executable by the one or more processors; and the one or more processors are configured to execute the machine-executable instructions to implement the encoding method described above.

The present disclosure provides an electronic device, including: one or more processors and a machine-readable storage medium, where the machine-readable storage medium stores machine-executable instructions executable by the one or more processors; and the one or more processors are configured to execute the machine-executable instructions to implement the decoding method or the encoding method described above.

The present disclosure provides a machine-readable storage medium, where the machine-readable storage medium stores a plurality of computer instructions, and when the computer instructions are executed by one or more processors, the decoding method or the encoding method described above is implemented.

The present disclosure provides a computer application program, and when the computer application program is executed by one or more processors, the decoding method or the encoding method described above is implemented.

It can be learned from the foregoing technical solutions that, in embodiments of the present disclosure, for neural network-based encoding and decoding technologies, a synthetic transform network based on an attention mechanism is provided, where the synthetic transform network includes an attention module, and the attention module is a cascaded hybrid attention module. When the synthetic transform network is implemented by using the cascaded hybrid attention module, network complexity and calculation complexity are effectively reduced while quality of a synthesized picture is ensured, decoding performance is improved, and quality of a reconstructed picture block is effectively ensured while complexity is reduced, encoding performance and decoding performance are improved.

**BRIEF DESCRIPTION OF DRAWINGS**

FIG. 1 is a schematic diagram of a three-dimensional feature matrix according to an implementation of the present disclosure.

FIG. 2 is a schematic diagram of pixel shuffle according to an implementation of the present disclosure.

FIG. 3 is a flowchart of a decoding method according to an implementation of the present disclosure.

FIG. 4 is a schematic diagram of a processing procedure of an encoder according to an implementation of the present disclosure.

FIG. 5 is a schematic diagram of a processing procedure of a decoder according to an implementation of the present disclosure.

FIGs. 6A-6D are schematic structural diagrams of a synthetic transform network according to an implementation of the present disclosure.

FIGs. 7A-7B are schematic structural diagrams of a synthetic transform network according to an implementation of the present disclosure.

FIGs. 8A-8H are schematic structural diagrams of a synthetic transform network according to an implementation of the present disclosure.

FIG. 9A is a diagram of a hardware structure of a decoding device according to an implementation of the present disclosure.

FIG. 9B is a diagram of a hardware structure of an encoding device according to an implementation of the present disclosure.

**DETAILED DESCRIPTION**

Terms used in embodiments of the present disclosure are merely intended to describe specific embodiments, but are not intended to limit this disclosure. The singular forms "a", "said", and "the" used in the embodiments and claims of this disclosure are also intended to include plural forms, unless the context clearly indicates other meanings. It should also be understood that the term "and/or" used herein refers to any or all possible combinations including one or more associated listed items. It should be understood that, although the terms first, second, third, and the like may be used in the embodiments of this disclosure to describe various information, the information should not be limited to these terms. These terms are only used to distinguish the same type of information from each other. For example, without departing from the scope of the embodiments of this disclosure, first information may also be referred to as second information, and similarly, the second information may also be referred to as the first information, depending on the context. In addition, the word "if" used may be interpreted as "when", or "upon", or "in response to determining".

An embodiment of this disclosure provides a decoding method. The decoding method may involve the following concepts.

Entropy coding: entropy coding refers to coding that, according to the principals of entropy, does not lose any information during a coding process, and information entropy represents an average amount of information (a measure of uncertainty) of a source. The coding manner of the entropy coding may include but is not limited to Shannon coding, Huffman coding, and arithmetic coding.

Neural Network (NN): the neural network refers to an artificial neural network, and the neural network is an operation model and includes a large quantity of nodes (or referred to as neurons) connected to each other. In a neural network, neurons (often referred to as processing units) may represent different objects, such as features, letters, concepts, or some meaningful abstract patterns. Types of processing units in a neural network may be classified into three types: an input unit, an output unit, and a hidden unit. The input unit receives signals and data of the external world; the output unit outputs a processing result; and the hidden unit is a unit that is located between the input unit and the output unit and cannot be observed from outside the system. The connection weights between neurons reflect the connection strength between units, and the representation and processing of information are embodied in the connection relationship of these processing units. A neural network is a non-programmed and brain-like style information processing method, and the essence of the neural network is to obtain a parallel distributed information processing function through the transform and dynamic behavior of the neural network, and imitate the information processing function of the human brain nervous system to different degrees and layers. In the field of video processing, common neural networks may include but are not limited to: a Convolutional Neural Network (CNN), a Recurrent Neural Network (RNN), a fully connected network, and the like.

Convolutional Neural Network (CNN): Convolutional neural network is a feedforward neural network, which is one of the extremely representative network structures in the deep learning technology, and the artificial neurons of the CNN can respond to surrounding units within a part of the coverage range, and has excellent performance for large-scale picture processing. A basic structure of the convolutional neural network includes two layers. One layer is a feature extraction layer (also referred to as a convolution layer), where an input of each neuron is connected to a local receptive field of a previous layer, and a local feature is extracted. Once the local feature is extracted, the positional relationship between the local feature and other features is also determined. The second layer is a feature mapping layer (also referred to as an activation layer), where each computation layer of the neural network includes a plurality of feature maps, each feature map is a plane, and weights of all neurons on the plane are equal. The feature mapping structure may use a Sigmoid function, a Rectified Linear Unit (ReLU) function, a Leake-ReLU function, a Parametric Rectified Linear Unit (PReLU) function, a Generalized Divisive Normalization (GDN) function, and the like as the activation function of the convolutional neural network. In addition, since neurons on one mapping plane share weights, the number of network free parameters is reduced.

Illustratively, one of the advantages of the convolutional neural network compared with picture processing algorithms is that the complex early preprocessing procedure (extracting artificial features, etc.) of pictures is avoided, raw pictures can be directly input for end-to-end learning. One of the advantages of the convolutional neural network compared with a common neural network is that the common neural network is fully connected, that is, the neurons from the input layer to the hidden layer are all connected, which will lead to a huge number of parameters, making the network training time-consuming and even difficult to train, while the convolutional neural network avoids this difficulty through local connection, weight sharing and other methods.

Deconvolution layer: the deconvolution layer is also referred to as a transposed convolution layer, and working processes of the deconvolution layer and the convolution layer are similar, and a main difference lies in that the deconvolution layer is capable of performing padding, so that the output is greater than the input (or may remain the same). If stride is 1, it indicates that the output size is equal to the input size; if stride is N, it indicates that the width of the output feature is N times the width of the input feature, and the height of the output feature is N times the height of the input feature.

Depthwise Separable Convolution: two convolution operations are required, in the first convolution operation, deep_wise convolution (that is, collecting features of each layer) is performed first, kernel_size = K*K*1, and the total number of parameters in the first convolution is K*K*Cin. In the second convolution operation, in order to obtain the output of the Cout dimension, kernel_size = 1*1*Cin, and the total number of parameters of the second convolution is 1*1*Cin*Cout. The output of the second convolution may be an output of the depthwise separable convolution, and the input of the first convolution may be an input of the depthwise separable convolution.

Generalization Ability: generalization ability refers to the adaptability of machine learning algorithms to fresh samples, and the purpose of learning is to learn a rule hidden behind data, and for data other than a learning set with the same rule, a trained network can also give an appropriate output, and this ability can be called the generalization ability.

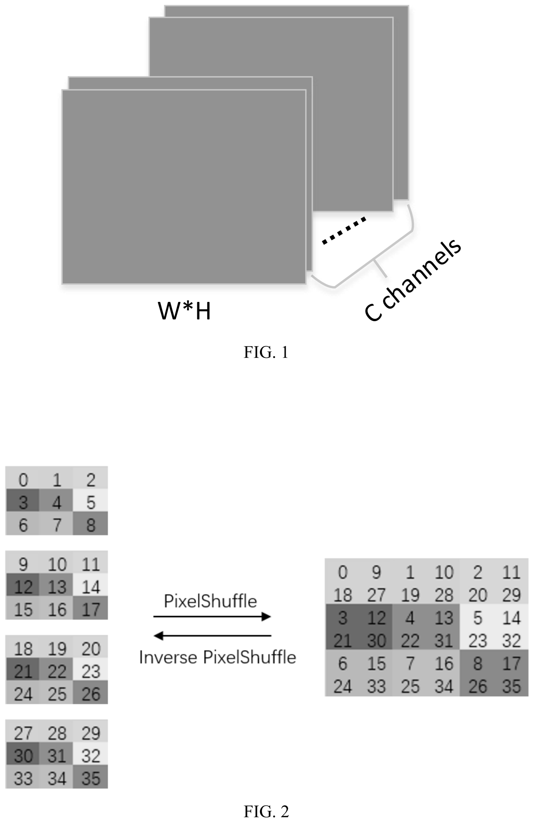

Feature: feature is a three-dimensional feature matrix or tensor of C*W*H. Referring to FIG. 1, which is a schematic diagram of a three-dimensional feature matrix, where in the three-dimensional feature matrix, C represents a quantity of channels, H represents a feature height, and W represents a feature width. The three-dimensional feature matrix may be an input of the neural network, or may be an output of the neural network.

Pixel Shuffle: it may also be referred to as feature position shuffle, and a high-resolution feature map is obtained by performing multi-channel shuffle on a low-resolution feature. Referring to FIG. 2, which is a schematic diagram of pixel shuffle, and in FIG. 2, it shows a schematic diagram of pixel shuffle when an upsampling coefficient is 2. Obviously, features with a channel number of 4 and a resolution of 3*3 are changed into features with a channel number of 1 and a resolution of 6*6 after passing through the feature position shuffle layer.

Rate-Distortion Optimized: there are two indexes for evaluating encoding efficiency: a bit rate and a Peak Signal to Noise Ratio (PSNR), where a smaller bit stream indicates a higher compression rate, and a larger PSNR indicates better quality of a reconstructed picture. During mode selection, the discrimination formula is essentially a comprehensive evaluation of the two. For example, the cost corresponding to the mode:

$$J(\mathrm{mode})=D+\lambda*R,$$

where D represents a distortion, and may be usually measured by using an sum-square error (SSE) indicator, where the SSE indicates a mean square sum of differences between a reconstructed picture block and a raw picture, and in order to implement cost consideration, the D may also be measured by using an Sum of absolute Difference (SAD) indicator, where the SAD indicates a sum of absolute values of differences between the reconstructed picture block and the raw picture; λ indicates a Lagrange multiplier, and R is an actual quantity of bits required for picture block coding in this mode, including a sum of bits required for coding mode information, motion information, a residual, and the like. During mode selection, if a comparison decision is made on a coding mode by using the rate-distortion optimized, optimal encoding performance can usually be ensured.

For each module of the encoder, a very large number of coding tools are provided, and each tool often has multiple modes. For different video sequences, coding tools that can obtain optimal encoding performance are often different. Therefore, during the encoding process, the Rate-Distortion Optimize (RDO) is usually used to compare the encoding performance of different tools or modes to select the best mode. After the optimal tool or mode is determined, the decision information of the tool or mode is transmitted by encoding the flag information in the bitstream. Although this method brings high encoding complexity, an optimal mode combination may be adaptively selected for different content, to obtain optimal encoding performance. The decoder may obtain the related mode information by directly parsing the flag information, which has little impact on complexity.

The general framework of end-to-end picture coding mainly includes a feature main information part and a hyper prior side information part, where the feature main information part includes an analysis transform network, quantization, normal entropy coding, normal entropy decoding, and a synthetic transform network, and the hyper prior side information includes a hyper prior analysis network, quantization, factored entropy coding, factored entropy decoding, and a hyper prior synthesis network. An image component x is respectively compressed and coded and reconstructed by the analysis transform network and the synthetic transform network of the feature main information part; the hyper prior side information part is mainly used to model the probability of the feature main information and guide the entropy coding and decoding of the feature main information. In the general framework of end-to-end picture coding, there are problems such as high computational complexity and poor decoding performance.

In view of the above findings, in this embodiment, a synthetic transform network based on an attention mechanism is provided by using characteristics of the end-to-end picture coding framework. The synthetic transform network includes an attention module, and the attention module is a cascaded hybrid attention module. When the synthetic transform network is implemented by using the cascaded hybrid attention module, network complexity and computational complexity are effectively reduced while quality of the synthesized picture is ensured, and decoding performance is improved.

The decoding method in the embodiments of this disclosure is described in detail below with reference to several specific embodiments.

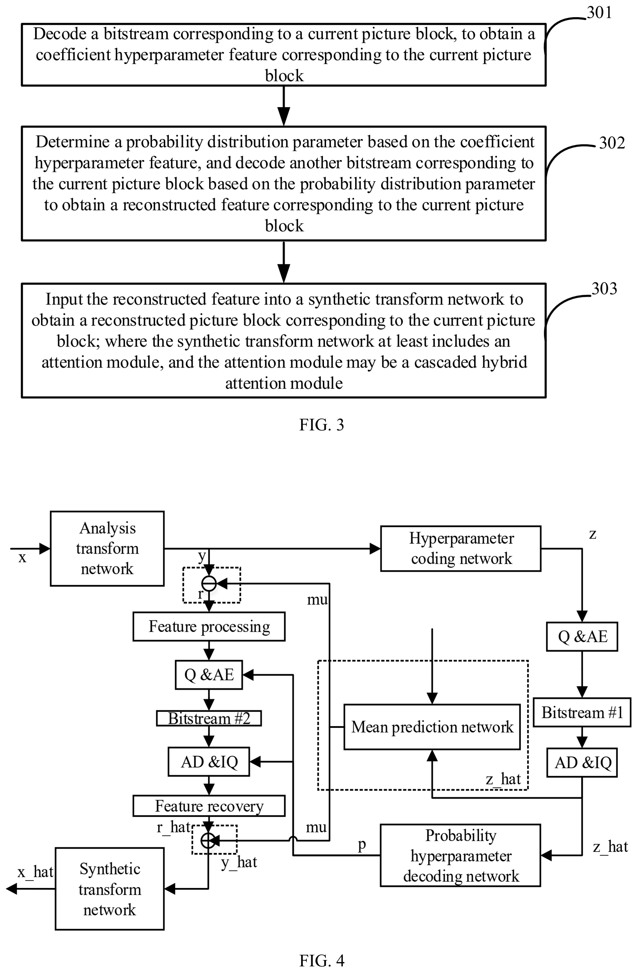

Embodiment 1: a decoding method is provided by an embodiment of the present disclosure, as shown in FIG. 3, which is a schematic flowchart of the decoding method, the method may be applied to a decoder (also referred to as a video decoder), and the method may include the follows.

Step 301, a bitstream corresponding to a current picture block is decoded to obtain a coefficient hyperparameter feature corresponding to the current picture block.

Step 302, a probability distribution parameter is determined based on the coefficient hyperparameter feature, and another bitstream corresponding to the current picture block is decoded based on the probability distribution parameter to obtain a reconstructed feature corresponding to the current picture block.

Step 303, the reconstructed feature is input into a synthetic transform network to obtain a reconstructed picture block corresponding to the current picture block. Where the synthetic transform network at least includes an attention module, and the attention module is a cascaded hybrid attention module. The cascaded hybrid attention module may include a first attention sub-module and a second attention sub-module, and the first attention sub-module and the second attention sub-module are connected in series, for example, an output feature of the first attention sub-module is an input feature of the second attention sub-module.

The bitstream corresponding to the current picture block may be a bitstream in which the coefficient hyperparameter feature corresponding to the current picture block is encoded; and the other bitstream corresponding to the current picture block may be a bitstream in which a residual feature corresponding to the current picture block is encoded.

Illustratively, if the attention module is a cascaded hybrid attention module, first processing may be performed by using the first attention sub-module on an input feature of the first attention sub-module, to obtain an output feature of the first attention sub-module. Where the output feature of the first attention sub-module is an input feature of the second attention sub-module, and the first processing includes at least one of: layer normalization, a convolution operation, and a dimension transform operation. Second processing may be performed by using the second attention sub-module on the input feature of the second attention sub-module, to obtain an output feature of the second attention sub-module. Where the second processing includes at least one of: a depthwise separable convolution operation, layer normalization, a multi-layer perception operation, a linear operation, an activation operation, a downsampling operation, a residual convolution operation, and an upsampling operation. For example, the second processing may include at least one of: the depthwise separable convolution operation, the layer normalization, and the multi-layer perception operation. In an embodiment, the second processing may include at least one of: the layer normalization, the linear operation, and the activation operation. In an embodiment, the second processing may include at least one of: the downsampling operation, the residual convolution operation, the upsampling operation, and the activation operation.

In a possible implementation, the performing, by using the first attention sub-module, the first processing on the input feature of the first attention sub-module, to obtain the output feature of the first attention sub-module may include but is not limited to: performing the layer normalization on the input feature of the first attention sub-module to obtain a layer-normalized feature; performing three-way convolution operations on the layer-normalized feature to obtain a query vector, a key vector and a value vector; performing the dimension transform operation on the query vector, the key vector, and the value vector respectively, to obtain a dimension-transformed query vector, a dimension-transformed key vector, and a dimension-transformed value vector; determining an attention weight based on the dimension-transformed query vector and the dimension-transformed key vector, and determining a correction feature corresponding to the input feature based on the attention weight and the dimension-transformed value vector; and determining the output feature of the first attention sub-module based on the input feature and the correction feature.

In a possible implementation, the performing, by using the first attention sub-module, the first processing on the input feature of the first attention sub-module, to obtain the output feature of the first attention sub-module may include but is not limited to: performing the layer normalization on the input feature of the first attention sub-module to obtain a layer-normalized feature; performing window partition on the layer-normalized feature to obtain a plurality of small-scale features; for each small-scale feature, performing three-way convolution operations on the small-scale feature to obtain a small-scale query feature, a small-scale key feature, and a small-scale value feature corresponding to the small-scale feature; concatenating the small-scale query features corresponding to the plurality of small-scale features to obtain a query vector; concatenating the small-scale key features corresponding to the plurality of small-scale features to obtain a key vector; and concatenating the small-scale value features corresponding to the plurality of small-scale features to obtain a value vector; then performing the dimension transform operation on the query vector, the key vector, and the value vector respectively, to obtain a dimension-transformed query vector, a dimension-transformed key vector, and a dimension-transformed value vector; determining an attention weight based on the dimension-transformed query vector and the dimension-transformed key vector, and determining a correction feature corresponding to the input feature based on the attention weight and the dimension-transformed value vector; and determining the output feature of the first attention sub-module based on the input feature and the correction feature.

In a possible implementation, the performing, by using the first attention sub-module, the first processing on the input feature of the first attention sub-module, to obtain the output feature of the first attention sub-module may include but is not limited to: performing the layer normalization on the input feature of the first attention sub-module to obtain a layer-normalized feature; performing three-way convolution operations on the layer-normalized feature to obtain a query vector, a key vector and a value vector; determining an attention weight based on the query vector and the key vector, and determining a correction feature corresponding to the input feature based on the attention weight and the value vector; and determining the output feature of the first attention sub-module based on the input feature and the correction feature.

In a possible implementation, the performing, by using the first attention sub-module, the first processing on the input feature of the first attention sub-module, to obtain the output feature of the first attention sub-module may include but is not limited to: performing the layer normalization on the input feature of the first attention sub-module to obtain a layer-normalized feature; performing window partition on the layer-normalized feature to obtain a plurality of small-scale features; for each small-scale feature, performing three-way convolution operations on the small-scale feature to obtain a small-scale query feature, a small-scale key feature, and a small-scale value feature corresponding to the small-scale feature; concatenating the small-scale query features corresponding to the plurality of small-scale features to obtain a query vector; concatenating the small-scale key features corresponding to the plurality of small-scale features to obtain a key vector; and concatenating the small-scale value features corresponding to the plurality of small-scale features to obtain a value vector; determining an attention weight based on the query vector and the key vector, and determining a correction feature corresponding to the input feature based on the attention weight and the value vector. Then, the output feature of the first attention sub-module may be determined based on the input feature and the correction feature.

In a possible implementation, the performing, by using the second attention sub-module, the second processing on the input feature of the second attention sub-module, to obtain the output feature of the second attention sub-module may include but is not limited to: performing the layer normalization on the input feature of the second attention sub-module to obtain a layer-normalized feature; performing a first linear operation on the layer-normalized feature to obtain a feature obtained after the first linear operation; performing the activation operation on the feature obtained after the first linear operation to obtain an activated feature; performing a second linear operation on the activated feature to obtain a feature obtained after the second linear operation; and determining the output feature of the second attention sub-module based on the input feature and the feature obtained after the second linear operation.

In a possible implementation, the performing, by using the second attention sub-module, the second processing on the input feature of the second attention sub-module, to obtain the output feature of the second attention sub-module may include but is not limited to: performing the downsampling operation on the input feature of the second attention sub-module to obtain a downsampled feature; performing the residual convolution operation on the downsampled feature to obtain a residual-convolved feature; performing the upsampling operation on the residual-convolved feature to obtain an upsampled feature; and performing the activation operation on the upsampled feature to obtain an activated feature; and performing the residual convolution operation on the input feature to obtain a convolution feature obtained after the residual convolution operation. On this basis, the output feature of the second attention sub-module may be determined based on the input feature, the activated feature, and the convolution feature.

In a possible implementation, the synthetic transform network may further include at least one deconvolution layer, and the attention module may be located behind one of the deconvolution layers.

Illustratively, the synthetic transform network may further include a residual layer, a first deconvolution layer, a first clipping layer, a first residual activation layer, a second deconvolution layer, a second clipping layer, a second residual activation layer, a third deconvolution layer, a third clipping layer, a third residual activation layer, a fourth deconvolution layer, and a fourth clipping layer. The synthetic transform network may include at least one attention module, and one of the attention modules is located behind the first deconvolution layer.

Illustratively, the synthetic transform network at least includes a residual layer, a first deconvolution layer, a first clipping layer, a first residual activation layer, and a second deconvolution layer. The synthetic transform network includes at least one attention module, and one of the attention modules is located behind the first deconvolution layer.

Based on a same concept as the foregoing decoding method, an embodiment of this disclosure further provides an encoding method, where the method may be applied to an encoder (also referred to as a video encoder), and the method may include: decoding a bitstream corresponding to a current picture block to obtain a coefficient hyperparameter feature corresponding to the current picture block; determining a probability distribution parameter based on the coefficient hyperparameter feature, and decoding another bitstream corresponding to the current picture block based on the probability distribution parameter to obtain a reconstructed feature corresponding to the current picture block; inputting the reconstructed feature into a synthetic transform network to obtain a reconstructed picture block corresponding to the current picture block; where the synthetic transform network at least includes an attention module, and the attention module is a cascaded hybrid attention module; where the cascaded hybrid attention module includes a first attention sub-module and a second attention sub-module, and the first attention sub-module and the second attention sub-module are connected in series.

The bitstream corresponding to the current picture block may be a bitstream in which the coefficient hyperparameter feature corresponding to the current picture block is encoded; and the other bitstream corresponding to the current picture block may be a bitstream in which the residual feature corresponding to the current picture block is encoded.

Illustratively, the implementation process of the encoding method is similar to that of the decoding method, and details are not described again.

Illustratively, the foregoing execution sequence is merely an example provided for ease of description, and in actual application, the execution sequence between steps may be changed, and the execution sequence is not limited. Moreover, in other embodiments, the steps of the corresponding method are not necessarily performed in the order shown and described in the present disclosure, and the method may include more or fewer steps than those described in the present disclosure. In addition, a single step described in this specification may be decomposed into a plurality of steps for description in other embodiments; the plurality of steps described in this specification may also be combined into a single step for description in other embodiments.

It can be learned from the foregoing technical solutions that, in embodiments of this disclosure, for neural network-based encoding and decoding technologies, a synthetic transform network based on an attention mechanism is provided, where the synthetic transform network includes an attention module, the attention module is a cascaded hybrid attention module, and when the synthetic transform network is implemented by using the cascaded hybrid attention module, network complexity and calculation complexity are effectively reduced while quality of a synthesized picture is ensured, decoding performance is improved, quality of a reconstructed picture block is effectively ensured while complexity is reduced, and encoding performance and decoding performance are improved.

Embodiment 2: a processing procedure of an encoder may refer to FIG. 4. Certainly, FIG. 4 is only an example of the processing procedure of the encoder, the processing procedure of the encoder is not limited, as long as encoding processing may be implemented by using a neural network.

After obtaining the current picture block x (the current picture block x may be a raw picture block x, i.e., an input picture block), the encoder may perform analysis transform on the current picture block x by using an analysis transform network (that is, a neural network), to obtain a picture feature y corresponding to the current picture block x. Performing analysis transform on the current picture block x by using the analysis transform network refers to: transforming the current picture block x to the picture feature y in the latent domain, thereby facilitating all subsequent processes in the latent domain.

A picture may be partitioned into one picture block, or may be partitioned into a plurality of picture blocks, and if the picture is partitioned into one picture block, the current picture block x may also be the picture, that is, the encoding and decoding processes of the picture block may also be directly used for the picture.

After obtaining the picture feature y, the encoder performs coefficient hyperparameter feature transform on the picture feature y to obtain the coefficient hyperparameter feature z, for example, the picture feature y may be input into a hyperparameter encoding network (i.e., a neural network), and the hyperparameter encoding network performs coefficient hyperparameter feature transform on the picture feature y to obtain the coefficient hyperparameter feature z. The hyperparameter encoding network may be a trained neural network, and a training process of the hyperparameter encoding network is not limited, as long as the coefficient hyperparameter feature transform can be performed on the picture feature y. The picture feature y in the latent domain passes through the hyperparameter encoding network to obtain hyper prior latent information z.

After obtaining the coefficient hyperparameter feature z, the encoder may quantize the coefficient hyperparameter feature z to obtain a hyperparameter quantification feature corresponding to the coefficient hyperparameter feature z, that is, a Q operation in FIG. 4 is a quantization process. After the hyperparameter quantification feature corresponding to the coefficient hyperparameter feature z is obtained, the hyperparameter quantification feature is encoded to obtain a Bitstream#1 (which may be referred to as a first bitstream) corresponding to the current picture block, that is, the AE operation in FIG. 4 represents an encoding process, for example, an entropy encoding process. In an embodiment, the encoder may also directly encode the coefficient hyperparameter feature z to obtain the Bitstream#1 corresponding to the current picture block. The hyperparameter quantification feature or the coefficient hyperparameter feature z carried in the Bitstream#1 is mainly used to obtain a mean value and a parameter of the probability distribution model.

After obtaining the Bitstream#1 corresponding to the current picture block, the encoder may send the Bitstream#1 corresponding to the current picture block to the decoder. For a processing procedure performed by the decoder on the Bitstream#1 corresponding to the current picture block, refer to subsequent embodiments.

After obtaining the Bitstream#1 corresponding to the current picture block, the encoder may further decode the Bitstream#1 to obtain a hyperparameter quantification feature, that is, AD in FIG. 4 represents a decoding process, and then the encoder may perform dequantization on the hyperparameter quantification feature to obtain a coefficient hyperparameter feature z_hat, where the coefficient hyperparameter feature z_hat may be the same as or different from the coefficient hyperparameter feature z, and an IQ operation in FIG. 4 is a dequantization process. In an embodiment, after obtaining the Bitstream#1 corresponding to the current picture block, the encoder may further decode the Bitstream#1 to obtain the coefficient hyperparameter feature z_hat, without involving the dequantization process of the hyperparameter quantification feature.

For the encoding process of the Bitstream#1, an encoding method of a fixed probability density model may be used, and for the decoding process of the Bitstream#1, a decoding method of a fixed probability density model may be used. This encoding and decoding processes are not limited.

After obtaining the coefficient hyperparameter feature z_hat, the encoder may perform context-based prediction based on the coefficient hyperparameter feature z_hat of the current picture block and the reconstructed feature y_hat of the previous picture block (for a process of determining the reconstructed feature y_hat, refer to a subsequent embodiment), to obtain a predicted value mu (i.e., a mean value mu) corresponding to the current picture block. For example, the coefficient hyperparameter feature z_hat and the reconstructed feature y_hat are input into a mean prediction network, and the predicted value mu is determined by the mean prediction network based on the coefficient hyperparameter feature z_hat and the reconstructed feature y_hat. The prediction process is not limited. For the context-based prediction process, the input includes the coefficient hyperparameter feature z_hat and the decoded reconstructed feature y_hat, a more accurate predicted value mu is obtained by jointly inputting the coefficient hyperparameter feature z_hat and the decoded reconstructed feature y_hat. The predicted value mu is subtracted from the original feature to obtain a residual, and the predicted value mu is added to the decoded residual to obtain the reconstructed feature y_hat.

In another implementation, the mean prediction network may obtain the predicted value corresponding to the current picture block based only on the coefficient hyperparameter feature z_hat of the current picture block, that is, obtain the predicted value corresponding to the current picture block without using the reconstructed feature y_hat of the previous picture block, so that complexity of obtaining the predicted value can be greatly reduced, and an encoding and decoding processes can be accelerated. The following predicted value obtaining method applied to the encoder may adopt one of the above two solutions, which will not be repeated.

It should be noted that the mean prediction network is an optional neural network, that is, there may be no mean prediction network, and the predicted value mu does not need to be determined by the mean prediction network. The dashed box in FIG. 4 indicates that the mean prediction network is optional.

After obtaining the picture feature y, the encoder may determine the residual feature r based on the picture feature y and the predicted value mu, for example, use a difference between the picture feature y and the predicted value mu as the residual feature r. Then, feature processing is performed on the residual feature r to obtain the picture feature s, which is not limited and may be any feature processing method. In this case, a mean prediction network needs to be deployed, and the predicted value mu is provided by the mean prediction network. In an embodiment, after obtaining the picture feature y, the encoder may perform feature processing on the picture feature y to obtain the picture feature s, which is not limited and may be any feature processing method. In this case, the mean prediction network does not need to be deployed, and the residual process represented by the dashed box is an optional process.

After obtaining the picture feature s, the encoder may quantize the picture feature s to obtain a picture quantization feature corresponding to the picture feature s, that is, the Q operation in FIG. 4 is a quantization process. After obtaining the picture quantization feature corresponding to the picture feature s, the encoder may encode the picture quantization feature to obtain a Bitstream#2 (which may be referred to as a second bitstream) corresponding to the current picture block, that is, the AE operation in FIG. 4 represents a encoding process, for example, an entropy encoding process. In an embodiment, the encoder may directly encode the picture feature s to obtain the Bitstream#2 corresponding to the current picture block without involving the quantization process of the picture feature s.

After obtaining the Bitstream#2 corresponding to the current picture block, the encoder may send the Bitstream#2 corresponding to the current picture block to the decoder. For a processing procedure performed by the decoder on the Bitstream#2 corresponding to the current picture block, refer to subsequent embodiments.

After obtaining the Bitstream#2 corresponding to the current picture block, the encoder may further decode the Bitstream#2 to obtain a picture quantification feature, that is, the AD in FIG. 4 represents a decoding process, and then the encoder may perform dequantization on the picture quantification feature to obtain a picture feature s', where the picture feature s' may be the same as or different from the picture feature s, and the IQ operation in FIG. 4 is a dequantization process. In an embodiment, after obtaining the Bitstream#2 corresponding to the current picture block, the encoder may further decode the Bitstream#2 to obtain the picture feature s', without involving the dequantization process of the picture quantification feature.

After obtaining the picture feature s', the encoder may perform feature recovery (that is, an inverse process of feature processing) on the picture feature s', where the feature recovery process is not limited, and may be any feature recovery manner, to obtain the residual feature r_hat, where the residual feature r_hat may be the same as or different from the residual feature r. After obtaining the residual feature r_hat, the encoder determines a reconstructed feature y_hat based on the residual feature r_hat and the predicted value mu, where the reconstructed feature y_hat may be the same as or different from the picture feature y, for example, a sum of the residual feature r_hat and the predicted value mu is used as the reconstructed feature y_hat. In this case, a mean prediction network needs to be deployed, and the predicted value mu is provided by the mean prediction network. In an embodiment, after obtaining the picture feature s', the encoder may perform feature recovery (that is, an inverse process of feature processing) on the picture feature s', to obtain a reconstructed feature y_hat, where the reconstructed feature y_hat may be the same as or different from the picture feature y. In this case, the mean prediction network does not need to be deployed, and the residual process represented by the dashed box is an optional process.

After obtaining the reconstructed feature y_hat, the encoder may perform synthesis transform on the reconstructed feature y_hat to obtain the reconstructed picture block x_hat corresponding to the current picture block x, for example, the reconstructed feature y_hat is input into a synthetic transform network, then synthesis transform is performed by the synthetic transform network on the reconstructed feature y_hat to obtain the reconstructed picture block x_hat. So far, the picture reconstruction process is completed.

In a possible implementation, when encoding the picture quantization feature or the picture feature s to obtain the Bitstream#2 corresponding to the current picture block, the encoder needs to first determine a probability distribution model, and then encode the picture quantization feature or the picture feature s based on the probability distribution model. In addition, when decoding the Bitstream#2, the encoder also needs to first determine a probability distribution model, and then decode the Bitstream#2 based on the probability distribution model.

To obtain the probability distribution model, still referring to FIG. 4, after obtaining the coefficient hyperparameter feature z_hat, the encoder may perform inverse transform of coefficient hyperparameter feature on the coefficient hyperparameter feature z_hat to obtain a probability distribution parameter p. For example, the coefficient hyperparameter feature z_hat is input into a probability hyperparameter decoding network, and inverse transform of coefficient hyperparameter feature is performed on the coefficient hyperparameter feature z_hat by the probability hyperparameter decoding network to obtain the probability distribution parameter p. After obtaining the probability distribution parameter p, the probability distribution model may be generated based on the probability distribution parameter p. The probability hyperparameter decoding network may be a trained neural network, a training process of the probability hyperparameter decoding network is not limited, as long as the inverse transform of coefficient hyperparameter feature can be performed on the coefficient hyperparameter feature z_hat.

In a possible implementation, the foregoing processing procedure of the encoder may be performed by a deep learning model or a neural network model, to implement an end-to-end picture compression and encoding process, and the encoding process is not limited.

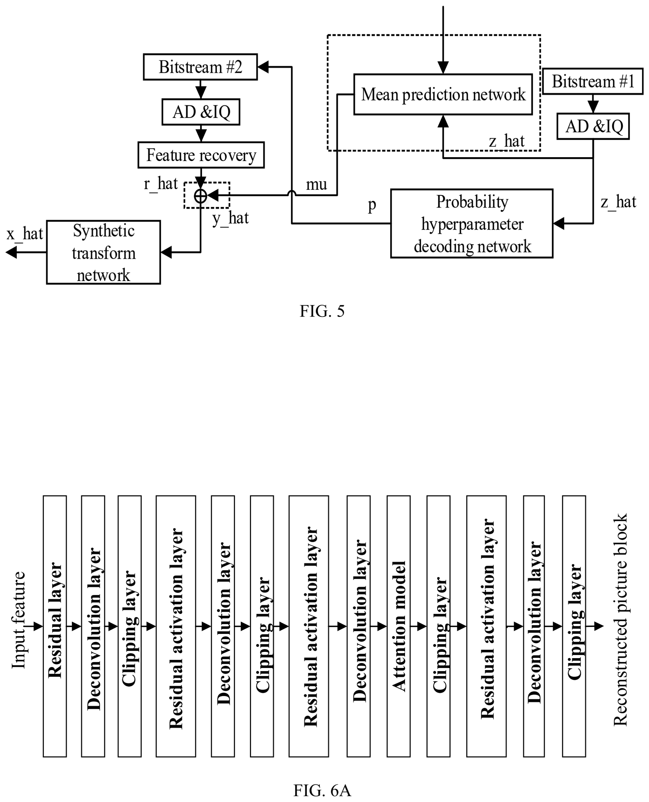

Embodiment 3: a processing procedure of a decoder may refer to FIG. 5. Certainly, FIG. 5 is only an example of the processing procedure of the decoder, the processing procedure of the decoder is not limited, as long as decoding processing may be implemented by using a neural network.

After obtaining the Bitstream#1 corresponding to the current picture block, the decoder may decode the Bitstream#1 to obtain a hyperparameter quantification feature, that is, AD in FIG. 5 represents a decoding process, and then the decoder may perform dequantization on the hyperparameter quantification feature to obtain a coefficient hyperparameter feature z_hat, where the coefficient hyperparameter feature z_hat may be the same as or different from the coefficient hyperparameter feature z, and an IQ operation in FIG. 5 is a dequantization process. In an embodiment, after obtaining the Bitstream#1 corresponding to the current picture block, the decoder may decode the Bitstream#1 to obtain the coefficient hyperparameter feature z_hat, without involving the dequantization process of the hyperparameter quantification feature. For the decoding process of the Bitstream#1, a decoding method of a fixed probability density model may be used, which is not limited.

A picture may be partitioned into one picture block, or may be partitioned into a plurality of picture blocks, and if the picture is partitioned into one picture block, the current picture block x may also be the picture, that is, the decoding process of the picture block may also be directly used for the picture.

After obtaining the coefficient hyperparameter feature z_hat, the decoder may perform context-based prediction based on the coefficient hyperparameter feature z_hat of the current picture block and the reconstructed feature y_hat of the previous picture block (for a process of determining the reconstructed feature y_hat, refer to a subsequent embodiment), to obtain a predicted value mu (i.e., a mean value mu) corresponding to the current picture block. For example, the coefficient hyperparameter feature z_hat and the reconstructed feature y_hat are input into a mean prediction network, and the predicted value mu is determined by the mean prediction network based on the coefficient hyperparameter feature z_hat and the reconstructed feature y_hat. The prediction process is not limited. For the context-based prediction process, the input includes the coefficient hyperparameter feature z_hat and the decoded reconstructed feature y_hat, a more accurate predicted value mu is obtained by jointly inputting the coefficient hyperparameter feature z_hat and the decoded reconstructed feature y_hat.

In another implementation, after obtaining the coefficient hyperparameter feature z_hat of the current picture block, the decoder may directly obtain, based on the coefficient hyperparameter feature z_hat, the predicted value mu corresponding to the current picture block, that is, obtain the predicted value without depending on the reconstructed feature y_hat of the previous picture block, so that complexity of obtaining the predicted value can be greatly reduced, and the encoding and decoding processes can be accelerated. The following predicted value obtaining method applied to the decoder may adopt one of the above two solutions, which will not be repeated.

It should be noted that the mean prediction network is an optional neural network, that is, there may be no mean prediction network, and the predicted value mu does not need to be determined by the mean prediction network. The dashed box in FIG. 5 indicates that the mean prediction network is optional.

After obtaining the Bitstream#2 corresponding to the current picture block, the decoder may decode the Bitstream#2 to obtain a picture quantification feature, that is, the AD in FIG. 5 represents a decoding process, and then the decoder may perform dequantization on the picture quantification feature to obtain a picture feature s', where the picture feature s' may be the same as or different from the picture feature s, and the IQ operation in FIG. 5 is a dequantization process. In an embodiment, after obtaining the Bitstream#2 corresponding to the current picture block, the decoder may decode the Bitstream#2 to obtain the picture feature s', without involving the dequantization process of the picture quantification feature.

After obtaining the picture feature s', the decoder may perform feature recovery (that is, an inverse process of feature processing) on the picture feature s', to obtain a residual feature r_hat, where the residual feature r_hat may be the same as or different from the residual feature r. After obtaining the residual feature r_hat, the decoder determines a reconstructed feature y_hat based on the residual feature r_hat and the predicted value mu, where the reconstructed feature y_hat may be the same as or different from the picture feature y, for example, a sum of the residual feature r_hat and the predicted value mu is used as the reconstructed feature y_hat. In this case, a mean prediction network needs to be deployed, and the predicted value mu is provided by the mean prediction network. In an embodiment, after obtaining the picture feature s', the decoder may perform feature recovery on the picture feature s', to obtain a reconstructed feature y_hat, where the reconstructed feature y_hat may be the same as or different from the picture feature y. In this case, the mean prediction network does not need to be deployed, and the residual process represented by the dashed box is an optional process.

After obtaining the reconstructed feature y_hat, the decoder may perform synthesis transform on the reconstructed feature y_hat to obtain the reconstructed picture block x_hat corresponding to the current picture block x, for example, the reconstructed feature y_hat is input into a synthetic transform network, then synthesis transform is performed by the synthetic transform network on the reconstructed feature y_hat to obtain the reconstructed picture block x_hat. So far, the picture reconstruction process is completed.

In a possible implementation, when decoding the Bitstream#2, the decoder needs to first determine a probability distribution model, and then decode the Bitstream#2 based on the probability distribution model. To obtain the probability distribution model, still referring to FIG. 5, after obtaining the coefficient hyperparameter feature z_hat, the decoder may perform inverse transform of coefficient hyperparameter feature on the coefficient hyperparameter feature z_hat to obtain a probability distribution parameter p. For example, the coefficient hyperparameter feature z_hat is input into a probability hyperparameter decoding network, and inverse transform of coefficient hyperparameter feature is performed on the coefficient hyperparameter feature z_hat by the probability hyperparameter decoding network to obtain the probability distribution parameter p. After obtaining the probability distribution parameter p, the probability distribution model may be generated based on the probability distribution parameter p. The probability hyperparameter decoding network may be a trained neural network, a training process of the probability hyperparameter decoding network is not limited, as long as the inverse transform of coefficient hyperparameter feature can be performed on the coefficient hyperparameter feature z_hat to obtain the probability distribution parameter p.

In a possible implementation, the foregoing processing procedure of the decoder may be performed by a deep learning model or a neural network model, to implement an end-to-end picture compression and decoding process, and the encoding process is not limited.

Embodiment 4: For Embodiment 1, Embodiment 2, and Embodiment 3, a mean prediction network may be deployed, or the mean prediction network may not be deployed. To improve feature coding performance, a mean prediction network is deployed as an example. When the mean prediction network is deployed, to obtain an accurate predicted value of the picture feature, the context-based prediction may be performed based on the coefficient hyperparameter feature z_hat of the current picture block and the reconstructed feature y_hat of the previous picture block, to obtain the predicted value mu corresponding to the current picture block; or the predicted value mu corresponding to the current picture block is obtained based on the coefficient hyperparameter feature z_hat of the current picture block.

The processing procedure of the encoder may include the following steps.

Step S11: After the raw picture is obtained, it is determined that, based on a picture resolution, whether to partition the raw picture. For example, if the picture resolution is greater than a threshold, the raw picture is partitioned, or otherwise, the raw picture is not partitioned. If it is determined to partition the raw picture, the raw picture is partitioned into several picture blocks x, and there is an overlapping part between adjacent picture blocks; otherwise, the picture block x is the raw picture, that is, the raw picture has only one picture block. For ease of description, one picture block is used as an example subsequently, the picture block is denoted as a current picture block x, and a processing procedure of the current picture block x is used as an example subsequently for description.

Step S12: After the current picture block x is obtained, analysis transform is performed on the current picture block x by an analysis transform network, to obtain a picture feature y (that is, a feature block) corresponding to the current picture block x. For example, the current picture block x is transformed to the picture feature y in the latent domain by the analysis transform network, thereby facilitating all subsequent processes in the latent domain.

Step S13: Coefficient hyperparameter feature transform is performed on the picture feature y to obtain a coefficient hyperparameter feature z corresponding to the current picture block x. For example, the picture feature y may be input into a hyperparameter encoding network (that is, a neural network), and the coefficient hyperparameter feature transform is performed by the hyperparameter encoding network on the picture feature y, to obtain the coefficient hyperparameter feature z corresponding to the current picture block x.

Step S14: The coefficient hyperparameter feature z is encoded into a first bitstream (Bitstream # 1) corresponding to the current picture block. For example, the coefficient hyperparameter feature z is quantized to obtain a hyperparameter quantification feature, and the hyperparameter quantification feature is encoded to obtain the first bitstream corresponding to the current picture block. In an embodiment, the coefficient hyperparameter feature z is directly encoded to obtain the first bitstream corresponding to the current picture block. That is, the first bitstream corresponding to the current picture block is a bitstream in which the coefficient hyperparameter feature z corresponding to the current picture block x is encoded. After the first bitstream corresponding to the current picture block is obtained, the first bitstream corresponding to the current picture block is sent to the decoder.

Step S15, after the first bitstream corresponding to the current picture block is obtained, the first bitstream is decoded to obtain a coefficient hyperparameter feature z_hat corresponding to the current picture block x. For example, the first bitstream may be decoded to obtain a hyperparameter quantification feature corresponding to the coefficient hyperparameter feature z_hat, and dequantization is performed on the hyperparameter quantification feature to obtain the coefficient hyperparameter feature z_hat. In an embodiment, the first bitstream is decoded to obtain the coefficient hyperparameter feature z_hat without the dequantization process.

Step S16, a probability distribution parameter is determined based on the coefficient hyperparameter feature z_hat. For example, inverse transform of coefficient hyperparameter feature is performed on the coefficient hyperparameter feature z_hat, to obtain a probability distribution parameter p. For example, the coefficient hyperparameter feature z_hat is input into a probability hyperparameter decoding network, and inverse transform of coefficient hyperparameter feature is performed on the coefficient hyperparameter feature z_hat by the probability hyperparameter decoding network to obtain the probability distribution parameter p. After obtaining the probability distribution parameter p, the probability distribution model may be generated based on the probability distribution parameter p.

Step S17, the coefficient hyperparameter feature z_hat is input into the mean prediction network, and the context-based prediction is performed by the mean prediction network based on the coefficient hyperparameter feature z_hat and the reconstructed feature y_hat of the previous picture block, to obtain the predicted value mu. In an embodiment, the coefficient hyperparameter feature z_hat is input into the mean prediction network, and the predicted value mu is obtained by the mean prediction network based on the coefficient hyperparameter feature z_hat.

Step S18, a residual feature r is determined based on the picture feature y and the mean feature mu (i.e., the predicted value mu), such as, a difference between the picture feature y and the mean feature mu is used as the residual feature r. Feature processing is performed on the residual feature r to obtain a feature-processed residual feature r. The procedure of the feature processing is not limited. The feature processing is an optional step, the feature processing may not be performed on the residual feature r.

Step S19, the residual feature r (or feature-processed residual feature r) is quantized to obtain a picture quantization feature, and the picture quantization feature is encoded to obtain a second bitstream (Bitstream#2) corresponding to the current picture block. In an embodiment, the residual feature r (or the feature-processed residual feature r) may be directly encoded to obtain the second bitstream corresponding to the current picture block. That is, the second bitstream corresponding to the current picture block is a bitstream in which the residual feature r corresponding to the current picture block x is encoded. After the second bitstream corresponding to the current picture block is obtained, the second bitstream corresponding to the current picture block is sent to the decoder.

Illustratively, when the picture quantization feature or the residual feature r is encoded, the probability distribution model corresponding to the probability distribution parameter p may be used to encode the picture quantization feature or the residual feature r, to obtain the second bitstream.

Step S20, after the second bitstream corresponding to the current picture block is obtained, the second bitstream is decoded by using the probability distribution model corresponding to the probability distribution parameter p, to obtain the picture quantization feature, dequantization is performed on the picture quantization feature, and feature recovery is performed on the dequantized feature, to obtain a residual feature r_hat, or the residual feature r_hat is directly obtained after performing the dequantization on the picture quantization feature, without involving the feature recovery process. In an embodiment, after the second bitstream is decoded, feature recovery is performed on the decoded feature to obtain the residual feature r_hat, or the residual feature r_hat is directly obtained after the second bitstream is decoded.

Step S21, after the residual feature r_hat is obtained, a reconstructed feature y_hat is determined based on the residual feature r_hat and the mean feature mu, for example, a sum of the residual feature r_hat and the mean feature mu is used as the reconstructed feature y_hat.

Step S22, the reconstructed feature y_hat is input into a synthetic transform network, a reconstructed picture block x_hat corresponding to the current picture block is determined and output by the synthetic transform network based on the reconstructed feature y_hat.

Illustratively, taking the deployment of the mean prediction network as an example, the processing procedure of the decoder may include the following steps.

Step S31, after a first bitstream corresponding to the current picture block is obtained, the first bitstream is decoded to obtain a coefficient hyperparameter feature z_hat corresponding to the current picture block x. For example, the first bitstream may be decoded to obtain a hyperparameter quantification feature corresponding to the coefficient hyperparameter feature z_hat, and dequantization is performed on the hyperparameter quantification feature to obtain the coefficient hyperparameter feature z_hat. In an embodiment, the first bitstream is decoded to obtain the coefficient hyperparameter feature z_hat without the dequantization process.

Step S32, a probability distribution parameter is determined based on the coefficient hyperparameter feature z_hat. For example, inverse transform of coefficient hyperparameter feature is performed on the coefficient hyperparameter feature z_hat, to obtain a probability distribution parameter p. For example, the coefficient hyperparameter feature z_hat is input into a probability hyperparameter decoding network, and inverse transform of coefficient hyperparameter feature is performed on the coefficient hyperparameter feature z_hat by the probability hyperparameter decoding network to obtain the probability distribution parameter p. After obtaining the probability distribution parameter p, the probability distribution model may be generated based on the probability distribution parameter p.

Step 33, after a second bitstream corresponding to the current picture block is obtained, the second bitstream corresponding to the current picture block is decoded based on the probability distribution parameter p, to obtain a reconstructed feature corresponding to the current picture block. For example, a residual feature r_hat corresponding to the current picture block may be determined, a predicted value mu corresponding to the current picture block may be determined, and a reconstructed feature y_hat is determined based on the residual feature r_hat and the mean feature mu. For example, a sum of the residual feature r_hat and the mean feature mu (i.e., the predicted value mu) is used as the reconstructed feature y_hat.

To determine the predicted value mu corresponding to the current picture block, after the coefficient hyperparameter feature z_hat is obtained, the coefficient hyperparameter feature z_hat may be input into the mean prediction network. The context-based prediction is performed by the mean prediction network based on the coefficient hyperparameter feature z_hat and the reconstructed feature y_hat of the previous picture block, to obtain the predicted value mu corresponding to the current picture block. In an embodiment, the coefficient hyperparameter feature z_hat may be input into the mean prediction network, and the predicted value mu corresponding to the current picture block is obtained by the mean prediction network based on the coefficient hyperparameter feature z_hat.

To determine the residual feature r_hat corresponding to the current picture block, the probability distribution model corresponding to the probability distribution parameter p may be used to decode the second bitstream, to obtain the picture quantization feature, dequantization is performed on the picture quantization feature, and feature recovery is performed on the dequantized feature, to obtain the residual feature r_hat, or the residual feature r_hat is directly obtained after performing the dequantization on the picture quantization feature, without involving the feature recovery process. In an embodiment, after the second bitstream is decoded, feature recovery is performed on the decoded feature to obtain the residual feature r_hat, or the residual feature r_hat is directly obtained after the second bitstream is decoded.

Step S34, the reconstructed feature y_hat is input into a synthetic transform network, a reconstructed picture block x_hat corresponding to the current picture block is determined and output by the synthetic transform network based on the reconstructed feature y_hat.

Embodiment 5: In Embodiment 1, Embodiment 2, Embodiment 3, and Embodiment 4, the synthetic transform network is involved. An implementation of this embodiment is the same as that of the Embodiment 1, Embodiment 2, Embodiment 3, or Embodiment 4, and details are not described again. The synthetic transform network involved therein is described in detail below.

An example of the synthetic transform network may be shown in FIG. 6A, that is, the synthetic transform network may sequentially include a residual layer, a deconvolution layer, a clipping layer, a residual activation layer, a deconvolution layer, a clipping layer, a residual activation layer, a deconvolution layer, an attention model, a clipping layer, a residual activation layer, a deconvolution layer, a clipping layer, and the like. An input feature of the synthetic transform network may be the reconstructed feature y_hat, and an output feature of the synthetic transform network may be the reconstructed picture block x_hat, that is, after the reconstructed feature y_hat is input into the synthetic transform network, the reconstructed picture block x_hat is obtained by sequentially performing processing of the foregoing network layers.

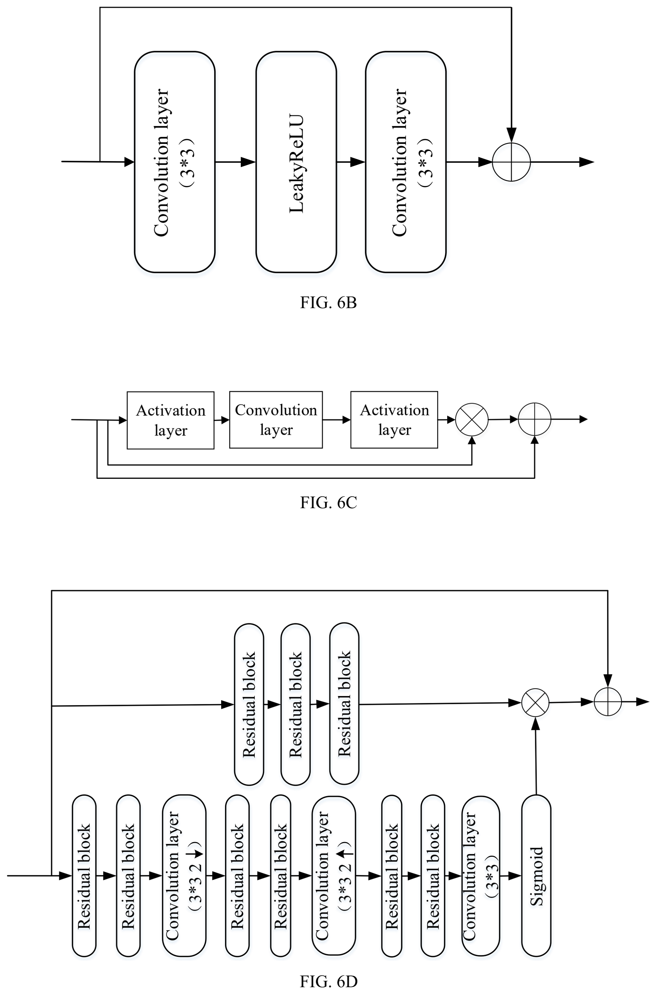

Illustratively, an example of the residual layer in the synthetic transform network may be shown in FIG. 6B, that is, the residual layer may sequentially include a convolution layer, a Rectified Linear Unit (ReLU) (such as a LeakyReLU), a convolution layer, and a superposition layer (configured to implement feature addition). The first convolution layer may be a $1\times1$ convolution layer, a $3\times3$ convolution layer, or a $5\times5$ convolution layer, which is not limited, for example, a $3\times3$ convolution layer may be selected. The second convolution layer may be a $1\times1$ convolution layer, a $3\times3$ convolution layer, or a $5\times5$ convolution layer, which is not limited, for example, a $3\times3$ convolution layer may be selected.

Illustratively, the residual activation layer in the synthetic transform network may be shown in FIG. 6C, that is, the residual activation layer may sequentially include an activation layer (such as a LeakyRelu activation layer), a convolution layer, an activation layer (such as a tanh activation layer), a multiplication layer (configured to implement feature multiplication), and a superposition layer (configured to implement feature addition). The convolution layer may be a 1×1 convolution layer, a 3×3 convolution layer, or a 5×5 convolution layer, which is not limited, for example, a 1×1 convolution layer may be selected.

Illustratively, the attention model in the synthetic transform network may be a Residual Non-local Attention Block (RNAB), that is, RNAB is introduced as the attention model, and RNAB is used to obtain non-local information of a picture and use the non-local information as an attention weight to improve decoding performance. An example of RNAB may be shown in FIG. 6D, that is, RNAB may sequentially include a residual block, a residual block, a downsampling convolution layer (for example, a 2× downsampling convolution layer, for example, a 3×3 convolution layer), a residual block, a residual block, an upsampling convolution layer (for example, a 2× upsampling convolution layer, for example, a 3×3 convolution layer), a residual block, a residual block, a convolution layer (for example, a 3×3 convolution layer), a sigmoid activation function, a residual block, a residual block, a residual block, a multiplication layer (configured to implement feature multiplication), and a superposition layer (configured to implement feature addition).

The residual block may be shown in FIG. 6B, the residual block is the same as the residual layer in FIG. 6B, may also sequentially include a convolution layer, a Rectified Linear Unit (ReLU) (such as a LeakyReLU), a convolution layer, and a superposition layer (configured to implement feature addition). In this way, after the input feature of the residual block is feature-extracted through the convolution layer, the rectified linear unit, and the convolution layer, the feature-extracted feature is added with the input feature of the residual block to obtain the output feature of the residual block.

A sub-module including a residual block, a residual block, a downsampling convolution layer, a residual block, a residual block, an upsampling convolution layer, a residual block, a residual block, a convolution layer, and a sigmoid activation function may be a non-local attention extraction sub-module. A sub-module including three residual blocks may be a feature extraction sub-module. An attention weight generated by passing an input feature of the RNAB through the non-local attention extraction sub-module is multiplied by an output feature of the feature extraction sub-module, and is added with the input feature of the RNAB, to obtain an output feature of the RNAB.

Embodiment 6: In Embodiment 1, Embodiment 2, Embodiment 3, and Embodiment 4, the synthetic transform network is involved. An implementation of this embodiment is the same as that of the Embodiment 1, Embodiment 2, Embodiment 3, or Embodiment 4, and details are not described again. The synthetic transform network involved therein is described in detail below.

The synthetic transform network may at least include an attention module, and the attention module is a cascaded hybrid attention module. In addition to the attention module, the synthetic transform network may further include other network layers, and a structure of the synthetic transform network is not limited in this embodiment, as long as the synthetic transform network includes the attention module.

In a possible implementation, in addition to the attention module, the synthetic transform network may further include at least one deconvolution layer, and in addition to the attention module and the at least one deconvolution layer, the synthetic transform network may further include other network layers, which is not limited. When the synthetic transform network includes at least one deconvolution layer, the attention module may be located behind any one of the deconvolution layers. In an embodiment, the attention module may be located behind each deconvolution layer, where attention modules located behind different deconvolution layers may be completely the same, or the attention modules located behind different deconvolution layers may not be completely the same. In an embodiment, the attention modules may be located behind a part of the deconvolution layers (for example, K deconvolution layers in all deconvolution layers, where K is greater than 1, and K is less than the total quantity of deconvolution layers). The attention modules located behind different deconvolution layers may be completely the same, or the attention modules located behind different deconvolution layers may not be completely the same.

In a possible implementation, in addition to the attention module, the synthetic transform network may include at least one of the following network layers: a residual layer, a first deconvolution layer, a first clipping layer, a first residual activation layer, a second deconvolution layer, a second clipping layer, a second residual activation layer, a third deconvolution layer, a third clipping layer, a third residual activation layer, a fourth deconvolution layer, and a fourth clipping layer. The synthetic transform network may include some or all of the network layers described above. Certainly, in addition to the foregoing network layers, the synthetic transform network may further include other network layers, which is not limited in this disclosure, and the foregoing network layers are merely used as an example for description.

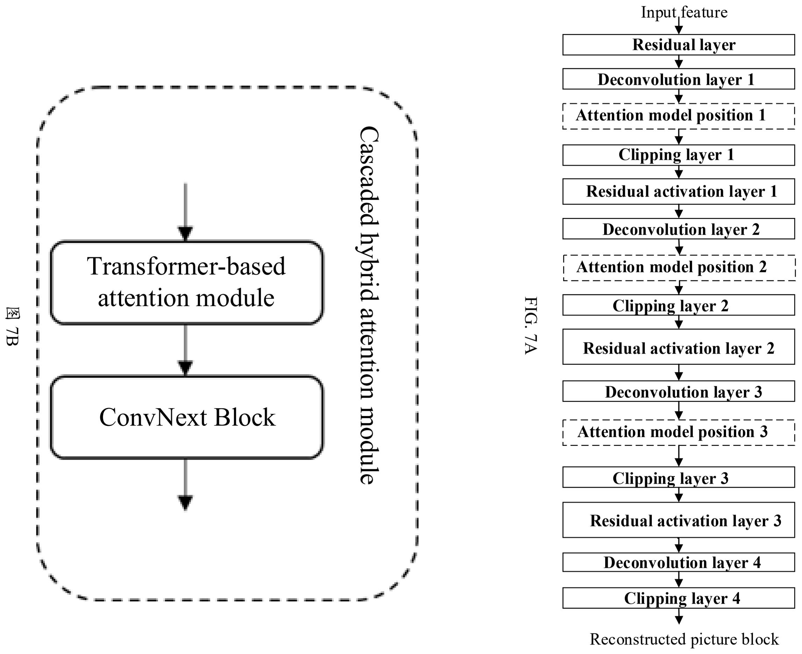

Referring to FIG. 7A, which is an example of the synthetic transform network, that is, the synthetic transform network may sequentially include: a residual layer, a deconvolution layer 1 (i.e., a first deconvolution layer), a clipping layer 1 (i.e., a first clipping layer), a residual activation layer 1 (i.e., a first residual activation layer), a deconvolution layer 2 (i.e., a second deconvolution layer), a clipping layer 2 (i.e., a second clipping layer), a residual activation layer 2 (i.e., a second residual activation layer), a deconvolution layer 3 (i.e., a third deconvolution layer), a clipping layer 3 (i.e., a third clipping layer), a residual activation layer 3 (i.e., a third residual activation layer), a deconvolution layer 4 (i.e., a fourth deconvolution layer), and a clipping layer 4 (i.e., a fourth clipping layer). Illustratively, the input feature of the synthetic transform network may be the reconstructed feature y_hat, and the output feature of the synthetic transform network may be the reconstructed picture block x_hat, that is, after the reconstructed feature y_hat is input into the synthetic transform network, the reconstructed picture block x_hat may be obtained and output by the synthetic transform network through processing of the foregoing network layers in sequence.

In FIG. 7A, three attention model positions are shown, that is, attention model position 1, attention model position 2, and attention model position 3. Illustratively, if the synthetic transform network includes only one attention module (i.e., a cascaded hybrid attention module), the attention module may be located behind the deconvolution layer 1, i.e., the attention module is located at the attention model position 1. In an embodiment, the attention module may be located behind the deconvolution layer 2, i.e., the attention module is located at the attention model position 2. In an embodiment, the attention module may be located behind the deconvolution layer 3, i.e., the attention module is located at the attention model position 3. For example, the attention module is placed behind the deconvolution layer 3. Of course, the above are only several examples of the position of the attention module, which is not limited herein, and the attention module may be located at any position of the synthetic transform network.

Illustratively, the synthetic transform network may include an attention module 1 located behind the deconvolution layer 1, an attention module 2 located behind the deconvolution layer 2, and an attention module 3 located behind the deconvolution layer 3, that is, the attention module 1 is located at the attention model position 1, the attention module 2 is located at the attention model position 2, and the attention module 3 is located at the attention model position 3. Of course, the attention module may also be located at other positions of the synthetic transform network, which is not limited.

The attention module 1, the attention module 2, and the attention module 3 may be completely the same, that is, the attention module 1, the attention module 2, and the attention module 3 may use the same network structure. In an embodiment, the attention module 1, the attention module 2, and the attention module 3 may not be completely the same. For example, the network structure of the attention module 1 may be the same as the network structure of the attention module 2, and may be different from the network structure of the attention module 3. In an embodiment, the network structure of the attention module 1 may be the same as the network structure of the attention module 3, and may be different from the network structure of the attention module 2. In an embodiment, the network structure of the attention module 2 may be the same as the network structure of the attention module 3, and may be different from the network structure of the attention module 1. In an embodiment, the network structure of the attention module 1 may be different from the network structure of the attention module 2, the network structure of the attention module 1 may be different from the network structure of the attention module 3, and the network structure of the attention module 2 may be different from the network structure of the attention module 3.

Illustratively, the synthetic transform network may include an attention module 1 located behind the deconvolution layer 1, and an attention module 2 located behind the deconvolution layer 2, that is, the attention module 1 is located at the attention model position 1, and the attention module 2 is located at the attention model position 2. Of course, the attention module may also be located at other positions of the synthetic transform network, which is not limited.

The attention module 1 and the attention module 2 may be completely the same, for example, the attention module 1 and the attention module 2 may use the same network structure. In an embodiment, the attention module 1 and the attention module 2 may not be completely the same, for example, the network structure of the attention module 1 may be different from the network structure of the attention module 2.

Illustratively, the synthetic transform network may include an attention module 1 located behind the deconvolution layer 1, and an attention module 2 located behind the deconvolution layer 3, that is, the attention module 1 is located at the attention model position 1, and the attention module 2 is located at the attention model position 3. Of course, the attention module may also be located at other positions of the synthetic transform network, which is not limited.

The attention module 1 and the attention module 2 may be completely the same, for example, the attention module 1 and the attention module 2 may use the same network structure. In an embodiment, the attention module 1 and the attention module 2 may not be completely the same, for example, the network structure of the attention module 1 may be different from the network structure of the attention module 2.

Illustratively, the synthetic transform network may include an attention module 1 located behind the deconvolution layer 2, and an attention module 2 located behind the deconvolution layer 3, that is, the attention module 1 is located at the attention model position 2, and the attention module 2 is located at the attention model position 3. Of course, the attention module may also be located at other positions of the synthetic transform network, which is not limited.

The attention module 1 and the attention module 2 may be completely the same, for example, the attention module 1 and the attention module 2 may use the same network structure. In an embodiment, the attention module 1 and the attention module 2 may not be completely the same, for example, the network structure of the attention module 1 may be different from the network structure of the attention module 2.

For an example of the residual layer in the synthetic transform network, refer to FIG. 6B, the residual layer may sequentially include a convolution layer, a Rectified Linear Unit (ReLU) (such as a LeakyReLU), a convolution layer, and a superposition layer. After the input feature is feature-extracted through the convolution layer, the rectified linear unit, and the convolution layer, the feature-extracted feature is added with the input feature to obtain the output feature of the residual layer. The first convolution layer may be a $1\times1$ convolution layer, a $3\times3$ convolution layer, or a $5\times5$ convolution layer, which is not limited, for example, a $3\times3$ convolution layer may be selected. The second convolution layer may be a $1\times1$ convolution layer, a $3\times3$ convolution layer, or a $5\times5$ convolution layer, which is not limited, for example, a $3\times3$ convolution layer may be selected.

For an example of the residual activation layer in the synthetic transform network, refer to FIG. 6C, the residual activation layer may sequentially include an activation layer (such as a LeakyRelu activation layer), a convolution layer, an activation layer (such as a tanh activation layer), a multiplication layer and a superposition layer. The structure of this residual activation layer is not limited. The convolution layer may be a $1\times1$ convolution layer, a $3\times3$ convolution layer, or a $5\times5$ convolution layer, which is not limited, for example, a $1\times1$ convolution layer may be selected.

Embodiment 7: Based on Embodiment 6, this embodiment further describes the attention module in Embodiment 6. In Embodiment 6, the attention module in the synthetic transform network is involved, the attention module may be a cascaded hybrid attention module. The RNAB is replaced by the cascaded hybrid attention module, so as to greatly reduce the computational complexity of decoding while ensuring the decoding performance as much as possible. Illustratively, the cascaded hybrid attention module can extract the attention weight of the input feature, and determine the output feature of the cascaded hybrid attention module based on the attention weight and the input feature.

Illustratively, the cascaded hybrid attention module may include a first attention sub-module (which may also be referred to as a transformer attention sub-module, and the transformer attention sub-module is denoted as a transformer-based attention module) and a second attention sub-module (which may also be referred to as an upgrade convolution sub-module, denoted as ConvNext Block). The first attention sub-module and the second attention sub-module may be connected in series, that is, an output feature of the first attention sub-module is an input feature of the second attention sub-module. For example, FIG. 7B is a schematic diagram of a cascaded hybrid attention module, an input feature (or an input picture) of the cascaded hybrid attention module is used as the input feature of the first attention sub-module (taking the transformer attention sub-module as an example in FIG. 7B). The input feature of the first attention sub-module passes through the first attention sub-module, and is processed by the first attention sub-module, to obtain the output feature of the first attention sub-module. The output feature of the first attention sub-module is used as the input feature of the second attention sub-module (taking the upgrade convolution sub-module as an example in FIG. 7B). The input feature of the second attention sub-module passes through the second attention sub-module, and is processed by the second attention sub-module, to obtain the output feature of the second attention sub-module. The output feature of the second attention sub-module is used as the output feature of the cascaded hybrid attention module.

Illustratively, after the input feature of the first attention sub-module is input into the first attention sub-module, first processing is performed on the input feature by the first attention sub-module, to obtain the output feature of the first attention sub-module. The first processing may include, but is not limited to, at least one of: layer normalization, a convolution operation, and a dimension transform operation, which is not limited herein, and the first processing is related to the network structure of the first attention sub-module. The network structure of the first attention sub-module may be arbitrarily configured.

Illustratively, after the input feature of the second attention sub-module is input into the second attention sub-module, second processing is performed on the input feature by the second attention sub-module, to obtain the output feature of the second attention sub-module. The second processing may include, but is not limited to, at least one of: a depthwise separable convolution operation, layer normalization, a multi-layer perception operation, a linear operation, an activation operation, a downsampling operation, a residual convolution operation, and an upsampling operation, which is not limited herein, and the second processing is related to the network structure of the second attention sub-module. The network structure of the second attention sub-module may be arbitrarily configured.

For example, the second processing may include at least one of: the depthwise separable convolution operation, the layer normalization, and the multi-layer perception operation. In an embodiment, the second processing may include at least one of: the layer normalization, the linear operation, and the activation operation. In an embodiment, the second processing may include at least one of: the downsampling operation, the residual convolution operation, the upsampling operation, and the activation operation.

Embodiment 8: Based on Embodiment 6 or Embodiment 7, this embodiment further describes the first attention sub-module involved in the cascaded hybrid attention module. In Embodiment 6 and Embodiment 7, the cascaded hybrid attention module includes the first attention sub-module. The first attention sub-module is configured to perform the first processing on the input feature of the first attention sub-module to obtain the output feature of the first attention sub-module. For example, the layer normalization is performed on the input feature of the first attention sub-module to obtain a layer-normalized feature. Three-way convolution operations are performed on the layer-normalized feature to obtain a query vector, a key vector and a value vector. The dimension transform operation is performed on the query vector, the key vector, and the value vector respectively, to obtain a dimension-transformed query vector, a dimension-transformed key vector, and a dimension-transformed value vector. An attention weight is determined based on the dimension-transformed query vector and the dimension-transformed key vector, and a correction feature corresponding to the input feature is determined based on the attention weight and the dimension-transformed value vector. The output feature of the first attention sub-module is determined based on the input feature and the correction feature.

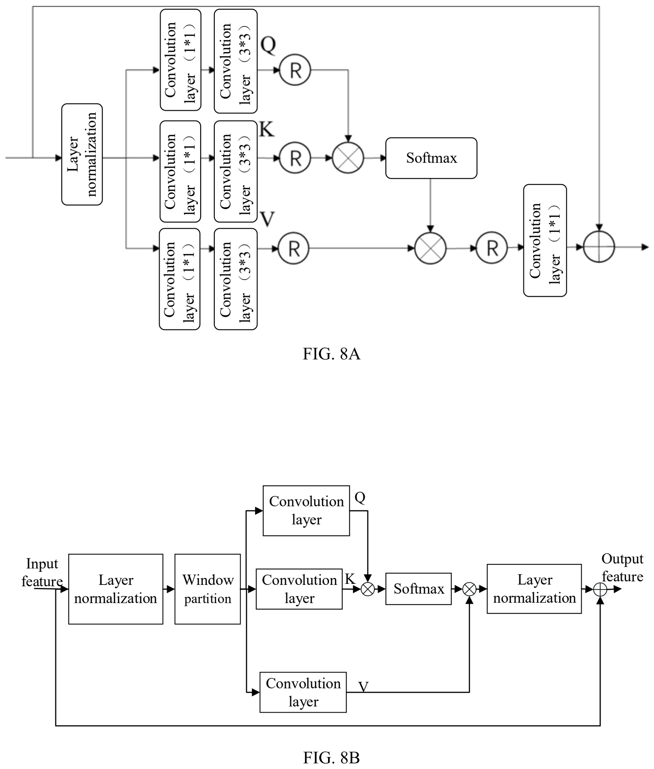

As shown in FIG. 8A, which is a schematic structural diagram of the first attention sub-module, which is only an example of the first attention sub-module, and the structure of the first attention sub-module is not limited.

Now, the first attention sub-module of FIG. 8A is taken as an example for description. The first attention sub-module may include a layer normalization layer. The layer normalization may be performed by the layer normalization layer on the input feature (or the input picture) of the first attention sub-module to obtain the layer-normalized feature. Layer normalization (layer norm) is a neural network regularization technology, and is used to normalize the input feature of each layer of neural network, to improve training and generalization performance. Operations of the layer normalization may include calculating mean and variance, normalization, scaling, and translation, so that the output of each hidden unit is in a relatively small range, and each hidden unit has a similar distribution throughout the entire dataset.

After the layer-normalized feature is obtained, the three-way convolution operations may be performed on the layer-normalized feature to obtain the query vector Q, the key vector K and the value vector V. For example, the convolution operation may be performed on the layer-normalized feature by using two convolution layers to obtain the query vector Q. The first convolution layer may be a 1×1 convolution layer, a 3×3 convolution layer, or a 5×5 convolution layer, which is not limited, for example, a 1×1 convolution layer may be selected. The second convolution layer may be a 3×3 convolution layer, a 5×5 convolution layer, or a 7×7 convolution layer, which is not limited, for example, a 3×3 convolution layer may be selected. The convolution operation may be performed on the layer-normalized feature by using two convolution layers to obtain the key vector K. The first convolution layer may be a 1×1 convolution layer, a 3×3 convolution layer, or a 5×5 convolution layer, for example, a 1×1 convolution layer may be selected. The second convolution layer may be a 3×3 convolution layer, a 5×5 convolution layer, or a 7×7 convolution layer, for example, a 3×3 convolution layer may be selected. The convolution operation may be performed on the layer-normalized feature by using two convolution layers to obtain the value vector V. The first convolution layer may be a 1×1 convolution layer, a 3×3 convolution layer, or a 5×5 convolution layer, for example, a 1×1 convolution layer may be selected. The second convolution layer may be a 3×3 convolution layer, a 5×5 convolution layer, or a 7×7 convolution layer, for example, a 3×3 convolution layer may be selected.

The dimension transform operation (i.e., an R operation) is performed on the query vector Q, the key vector K, and the value vector V respectively, to obtain a dimension-transformed query vector Q, a dimension-transformed key vector K, and a dimension-transformed value vector V. An objective of the dimension transform operation is to transform transformed tensor into a dimensional form required by a multi-head self-attention mechanism. The multi-head self-attention mechanism is a technology widely used in a natural language processing (NLP) task. The technology constructs a connection between context words by using a self-attention mechanism, to reconstruct a representation of a target word based on the context. The multi-head self-attention mechanism is a combination of multiple groups of self-attention mechanisms, and can learn different types of contextual influence situations. By passing outputs of the plurality of self-attentions through a parameter matrix to obtain a new output, the multi-head self-attention mechanism can capture a larger range of correlation features and increase an expression capability of a model.

The attention weight is determined based on the dimension-transformed query vector Q and the dimension-transformed key vector K. For example, matrix multiplication is performed on the dimension-transformed query vector Q and the dimension-transformed key vector K, and a result of the matrix multiplication is passed through a soft maximum function (Softmax) to obtain the attention weight. The processing procedure of Softmax is not limited.

The correction feature corresponding to the input feature is determined based on the attention weight and the dimension-transformed value vector V. For example, matrix multiplication is performed on the dimension-transformed value vector V and the attention weight, a dimension transform operation (i.e., the R operation) is performed on the result of the matrix multiplication, and a convolution operation is performed on the dimension-transformed feature, to obtain the correction feature corresponding to the input feature. The convolution layer may be a 1×1 convolution layer, a 3×3 convolution layer, or a 5×5 convolution layer, for example, a 1×1 convolution layer may be selected.

The output feature of the first attention sub-module is determined based on the input feature of the first attention sub-module and the correction feature. For example, matrix addition is performed on the input feature and the correction feature to obtain the output feature of the first attention sub-module.

At this point, the processing procedure of the first attention sub-module is completed, and the output feature of the first attention sub-module is obtained.

Embodiment 9: Based on Embodiment 6 or Embodiment 7, this embodiment further describes the first attention sub-module involved in the cascaded hybrid attention module. In Embodiment 6 and Embodiment 7, the cascaded hybrid attention module includes the first attention sub-module. The first attention sub-module is configured to perform the first processing on the input feature of the first attention sub-module to obtain the output feature of the first attention sub-module. For example, the layer normalization is performed on the input feature of the first attention sub-module to obtain the layer-normalized feature. Window partition is performed on the layer-normalized feature to obtain a plurality of small-scale features. For each small-scale feature, three-way convolution operations are performed on the small-scale feature to obtain a small-scale query feature, a small-scale key feature, and a small-scale value feature corresponding to the small-scale feature. Small-scale query features corresponding to the plurality of small-scale features are concatenated to obtain a query vector. Small-scale key features corresponding to the plurality of small-scale features are concatenated to obtain a key vector. And small-scale value features corresponding to the plurality of small-scale features are concatenated to obtain a value vector. The dimension transform operation is performed on the query vector, the key vector, and the value vector respectively, to obtain a dimension-transformed query vector, a dimension-transformed key vector, and a dimension-transformed value vector. An attention weight is determined based on the dimension-transformed query vector and the dimension-transformed key vector, and a correction feature is determined based on the attention weight and the dimension-transformed value vector. The output feature of the first attention sub-module is determined based on the input feature and the correction feature.

For example, based on the first attention sub-module in FIG. 8A, a window partition layer may be added behind the layer normalization layer. The structure of the first attention sub-module is not limited, for example, an example of the structure of the first attention sub-module may be shown in FIG. 8A.

Illustratively, the first attention sub-module may include a layer normalization layer. The layer normalization may be performed by the layer normalization layer on the input feature (or the input picture) of the first attention sub-module to obtain the layer-normalized feature.

The window partition may be performed on the layer-normalized feature by using the window partition layer to obtain a plurality of small-scale features. For example, the layer-normalized feature is partitioned into a plurality of small-scale features, the width of each small-scale feature is wi, the height of each small-scale feature is hi, the widths of different small-scale features may be the same or different, and the heights of different small-scale features may be the same or different.

For each small-scale feature, the three-way convolution operations are performed on the small-scale feature to obtain a small-scale query feature, a small-scale key feature, and a small-scale value feature corresponding to the small-scale feature. For example, the convolution operation may be performed on the small-scale feature by using two convolution layers to obtain the small-scale query feature. The first convolution layer may be a 1×1 convolution layer, a 3×3 convolution layer, or a 5×5 convolution layer, for example, a 1×1 convolution layer may be selected. The second convolution layer may be a 3×3 convolution layer, a 5×5 convolution layer, or a 7×7 convolution layer, for example, a 3×3 convolution layer may be selected. For example, the convolution operation may be performed on the small-scale feature by using two convolution layers to obtain the small-scale key feature. The first convolution layer may be a 1×1 convolution layer, a 3×3 convolution layer, or a 5×5 convolution layer, for example, a 1×1 convolution layer may be selected. The second convolution layer may be a 3×3 convolution layer, a 5×5 convolution layer, or a 7×7 convolution layer, for example, a 3×3 convolution layer may be selected. The convolution operation may be performed on the small-scale feature by using two convolution layers to obtain the small-scale value feature. The first convolution layer may be a 1×1 convolution layer, a 3×3 convolution layer, or a 5×5 convolution layer, for example, a 1×1 convolution layer may be selected. The second convolution layer may be a 3×3 convolution layer, a 5×5 convolution layer, or a 7×7 convolution layer, for example, a 3×3 convolution layer may be selected.

The small-scale query features corresponding to all the small-scale features may be concatenated to obtain the query vector Q. The feature concatenating process is not limited. The small-scale key features corresponding to all the small-scale features may be concatenated to obtain the key vector K. And the small-scale value features corresponding to all the small-scale features may be concatenated to obtain the value vector V.

The dimension transform operation (i.e., the R operation) is performed on the query vector Q, the key vector K, and the value vector V respectively, to obtain a dimension-transformed query vector Q, a dimension-transformed key vector K, and a dimension-transformed value vector V.

The attention weight is determined based on the dimension-transformed query vector Q and the dimension-transformed key vector K. For example, matrix multiplication is performed on the dimension-transformed query vector Q and the dimension-transformed key vector K, and a result of the matrix multiplication is passed through a soft maximum function (Softmax) to obtain the attention weight. The processing procedure of Softmax is not limited.

The correction feature corresponding to the input feature may be determined based on the attention weight and the dimension-transformed value vector V. For example, matrix multiplication is performed on the dimension-transformed value vector V and the attention weight, a dimension transform operation (i.e., the R operation) is performed on the result of the matrix multiplication, and a convolution operation is performed on the dimension-transformed feature, to obtain the correction feature corresponding to the input feature. The convolution layer may be a 1×1 convolution layer, a 3×3 convolution layer, or a 5×5 convolution layer, for example, a 1×1 convolution layer may be selected.

The output feature of the first attention sub-module may be determined based on the input feature of the first attention sub-module and the correction feature. For example, matrix addition is performed on the input feature and the correction feature to obtain the output feature of the first attention sub-module.

At this point, the processing procedure of the first attention sub-module is completed, and the output feature of the first attention sub-module is obtained.

Embodiment 10: Based on Embodiment 6 or Embodiment 7, this embodiment further describes the first attention sub-module involved in the cascaded hybrid attention module. In Embodiment 6 and Embodiment 7, the cascaded hybrid attention module includes the first attention sub-module. The first attention sub-module is configured to perform the first processing on the input feature of the first attention sub-module to obtain the output feature of the first attention sub-module. For example, layer normalization is performed on the input feature of the first attention sub-module to obtain a layer-normalized feature. Window partition is performed on the layer-normalized feature to obtain a plurality of small-scale features. For each small-scale feature, the three-way convolution operations are performed on the small-scale feature to obtain a small-scale query feature, a small-scale key feature, and a small-scale value feature corresponding to the small-scale feature. The small-scale query features corresponding to the plurality of small-scale features are concatenated to obtain a query vector. The small-scale key features corresponding to the plurality of small-scale features are concatenated to obtain a key vector. And the small-scale value features corresponding to the plurality of small-scale features are concatenated to obtain a value vector. An attention weight are determined based on the query vector and the key vector, and a correction feature corresponding to the input feature is determined based on the attention weight and the value vector. The output feature of the first attention sub-module is determined based on the input feature and the correction feature.

As shown in FIG. 8B, which is a schematic structural diagram of the first attention sub-module, which is only an example of the first attention sub-module. The structure of the first attention sub-module is not limited, and the following takes the first attention sub-module in FIG. 8B as an example for description.

Illustratively, the first attention sub-module may include a layer normalization layer. The layer normalization may be performed by the layer normalization layer on the input feature (or the input picture) of the first attention sub-module to obtain the layer-normalized feature.

The first attention sub-module may include a window partition layer, and the window partition is performed on the layer-normalized feature by using the window partition layer to obtain the plurality of small-scale features. For example, the layer-normalized feature is partitioned into a plurality of small-scale features by using the window partition layer. The width of each small-scale feature is wi, the height of each small-scale feature is hi, the widths of different small-scale features may be the same or different, and the heights of different small-scale features may be the same or different.

For each small-scale feature, the three-way convolution operations are performed on the small-scale feature to obtain a small-scale query feature, a small-scale key feature, and a small-scale value feature corresponding to the small-scale feature. For example, the convolution operation is performed on the small-scale feature by using a convolution layer (for example, a 1×1 convolution layer and a 3×3 convolution layer) to obtain the small-scale query feature. The convolution operation is performed on the small-scale feature by using a convolution layer (for example, a 1×1 convolution layer and a 3×3 convolution layer) to obtain the small-scale key feature. The convolution operation is performed on the small-scale feature by using a convolution layer (for example, a 1×1 convolution layer and a 3×3 convolution layer) to obtain the small-scale value feature. The small-scale query features corresponding to all the small-scale features are concatenated to obtain a query vector Q. The small-scale key features corresponding to all the small-scale features are concatenated to obtain a key vector K. And the small-scale value features corresponding to all the small-scale features are concatenated to obtain a value vector V.

The attention weight is determined based on the query vector Q and the key vector K. For example, matrix multiplication is performed on the query vector Q and the key vector K, and a result of the matrix multiplication is passed through a soft maximum function (Softmax) to obtain the attention weight.

For the obtained attention weight and the value vector V, in an example, the correction feature corresponding to the input feature may be directly obtained based on the attention weight and the value vector V. For example, matrix multiplication is performed on the attention weight and the value vector V, and a result of the matrix multiplication is used as the correction feature corresponding to the input feature, that is, the second layer normalization layer in FIG. 8B may be removed.

Further, the output feature of the first attention sub-module may be determined based on the input feature of the first attention sub-module and the correction feature. For example, matrix addition is performed on the input feature and the correction feature to obtain the output feature of the first attention sub-module.

At this point, the processing procedure of the first attention sub-module is completed, and the output feature of the first attention sub-module is obtained.

Embodiment 11: Based on Embodiment 6 or Embodiment 7, this embodiment further describes the first attention sub-module involved in the cascaded hybrid attention module. In Embodiment 6 and Embodiment 7, the cascaded hybrid attention module includes the first attention sub-module. The first attention sub-module is configured to perform the first processing on the input feature of the first attention sub-module to obtain the output feature of the first attention sub-module. For example, layer normalization is performed on the input feature of the first attention sub-module to obtain a layer-normalized feature. Three-way convolution operations are performed on the layer-normalized feature to obtain a query vector, a key vector and a value vector. An attention weight is determined based on the query vector and the key vector, and a correction feature corresponding to the input feature is determined based on the attention weight and the value vector. An output feature of the first attention sub-module is determined based on the input feature of the first attention sub-module and the correction feature.

For example, based on the first attention sub-module in FIG. 8B, the window partition layer behind the layer normalization layer may be removed. The structure of the first attention sub-module is not limited, for example, an example of the structure of the first attention sub-module may be shown in FIG. 8B.

Illustratively, the first attention sub-module may include a layer normalization layer. The layer normalization may be performed by the layer normalization layer on the input feature (or the input picture) of the first attention sub-module to obtain the layer-normalized feature.

The first attention sub-module may include a convolution layer to perform the three-way convolution operations on the layer-normalized feature, to obtain the query vector Q, the key vector K and the value vector V. For example, the convolution operation may be performed on the layer-normalized feature by using a convolution layer (for example, a $1\times1$ convolution layer and a $3\times3$ convolution layer) to obtain the query vector Q. The convolution operation may be performed on the layer-normalized feature by using a convolution layer (for example, a $1\times1$ convolution layer and a $3\times3$ convolution layer) to obtain the key vector K. The convolution operation may be performed on the layer-normalized feature by using a convolution layer (for example, a $1\times1$ convolution layer and a $3\times3$ convolution layer) to obtain the value vector V.

The attention weight is determined based on the query vector Q and the key vector K. For example, matrix multiplication is performed on the query vector Q and the key vector K, and a result of the matrix multiplication is passed through a soft maximum function (Softmax) to obtain the attention weight.

For the obtained attention weight and the value vector V, in an example, the correction feature corresponding to the input feature may be directly obtained based on the attention weight and the value vector V. For example, matrix multiplication is performed on the attention weight and the value vector V, and a result of the matrix multiplication is used as the correction feature corresponding to the input feature, that is, the second layer normalization layer in FIG. 8B may be removed.

Further, the output feature of the first attention sub-module may be determined based on the input feature of the first attention sub-module and the correction feature. For example, matrix addition is performed on the input feature and the correction feature to obtain the output feature of the first attention sub-module.

At this point, the processing procedure of the first attention sub-module is completed, and the output feature of the first attention sub-module is obtained.

In Embodiment 8 to Embodiment 11, several examples of the first attention sub-module are provided, and the structure of the first attention sub-module is not limited in the present disclosure, as long as the first processing may be performed on the input feature to obtain the output feature.

Embodiment 12: Based on Embodiment 6 or Embodiment 7, this embodiment further describes the second attention sub-module involved in the cascaded hybrid attention module. In Embodiment 6 and Embodiment 7, the cascaded hybrid attention module includes the second attention sub-module. The second attention sub-module is configured to perform the second processing on the input feature of the second attention sub-module to obtain the output feature of the second attention sub-module. For example, a depthwise separable convolution operation is performed on the input feature of the second attention sub-module to obtain a convolved feature (i.e., a feature obtained after the depthwise separable convolution operation). Layer normalization is performed on the convolved feature to obtain a layer-normalized feature. A multi-layer perception operation is performed on the layer-normalized feature to obtain a multi-layer perceived feature. And the output feature of the second attention sub-module is determined based on the input feature and the multi-layer perceived feature.

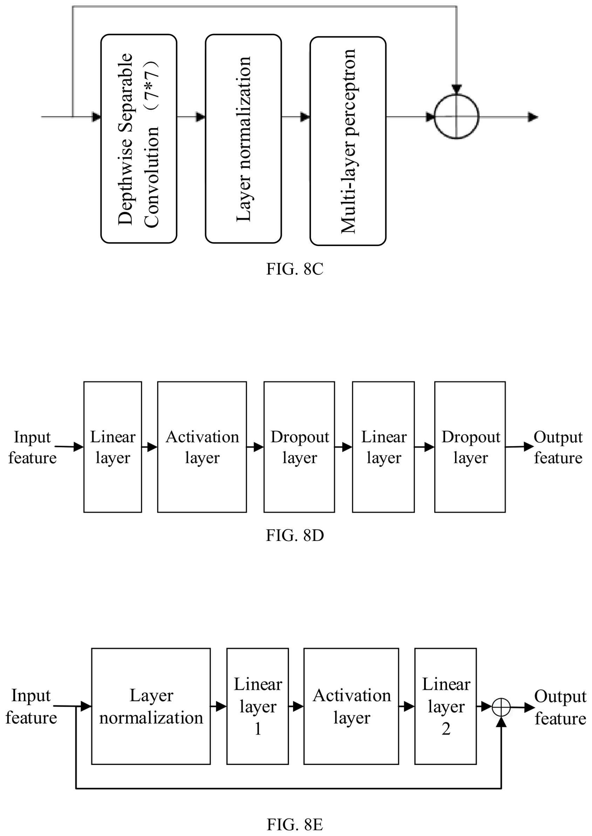

As shown in FIG. 8C, which is a schematic structural diagram of the second attention sub-module, which is only an example of the second attention sub-module. The structure of the second attention sub-module is not limited, and the following takes the second attention sub-module in FIG. 8C as an example for description.

Illustratively, the second attention sub-module may include a depthwise separable convolution layer. And the depthwise separable convolutional layer may be a $1\times1$ convolution layer, a $3\times3$ convolution layer, a $5\times5$ convolution layer, or a $7\times7$ convolution layer, which is not limited, for example, a $7\times7$ convolution layer may be selected. The depthwise separable convolutional operation may be performed on the input feature of the second attention sub-module by using the depthwise separable convolution layer to obtain a convolved feature (i.e., a feature obtained after the depthwise separable convolution operation), and the convolution operation is not limited.

The second attention sub-module may include a layer normalization layer. The layer normalization may be performed by the layer normalization layer on the convolved feature to obtain the layer-normalized feature. Operations of the layer normalization include calculating mean and variance, normalization, scaling, and translation, so that the output of each hidden unit is in a relatively small range, and each hidden unit has a similar distribution throughout the entire dataset.

The second attention sub-module may include a multi-layer perceptron, and the multi-layer perception operation may be performed by the multi-layer perceptron on the layer-normalized feature to obtain the multi-layer perceived feature. As shown in FIG. 8D, which is a schematic structural diagram of a multi-layer perceptron, and the multi-layer perceptron may include a linear layer, an activation layer, a dropout layer, a linear layer, and a dropout layer. Based on this, the layer-normalized feature sequentially passes through the linear layer, the activation layer, the dropout layer, the linear layer, and the dropout layer, to obtain the multi-layer perceived feature. The activation layer may be a relu layer, a leaky relu layer, a sigmoid layer, a tanh layer, or a Gelu layer, and a type of the activation layer is not limited. The dropout layer may be a DropOut layer, and a type of the dropout layer is not limited. It should be noted that FIG. 8D is only an example of the multi-layer perceptron, and the structure of the multi-layer perceptron is not limited.

The output feature of the second attention sub-module is determined based on the input feature of the second attention sub-module and the multi-layer perceived feature. For example, matrix addition is performed on the input feature and the multi-layer perceived feature to obtain the output feature.

At this point, the processing procedure of the second attention sub-module is completed, and the output feature of the second attention sub-module is obtained.

Embodiment 13: Based on Embodiment 6 or Embodiment 7, this embodiment further describes the second attention sub-module involved in the cascaded hybrid attention module. In Embodiment 6 and Embodiment 7, the cascaded hybrid attention module includes the second attention sub-module. The second attention sub-module is configured to perform the second processing on the input feature of the second attention sub-module to obtain the output feature of the second attention sub-module. For example, the layer normalization is performed on the input feature of the second attention sub-module to obtain the layer-normalized feature. A first linear operation may be performed on the layer-normalized feature to obtain a feature obtained after the first linear operation. An activation operation may be performed on the feature obtained after the first linear operation to obtain an activated feature. A second linear operation may be performed on the activated feature to obtain a feature obtained after the second linear operation. And the output feature of the second attention sub-module may be determined based on the input feature of the second attention sub-module and the feature obtained after the second linear operation.

As shown in FIG. 8E, which is a schematic structural diagram of the second attention sub-module, which is only an example of the second attention sub-module. The structure of the second attention sub-module is not limited, and the following takes the second attention sub-module in FIG. 8E as an example for description.

Illustratively, the second attention sub-module may include a layer normalization layer. The layer normalization may be performed by the layer normalization layer on the input feature of the second attention sub-module to obtain the layer-normalized feature. The second attention sub-module may include a linear layer 1. The first linear operation may be performed by the linear layer 1 on the layer-normalized feature to obtain the feature obtained after the first linear operation.

The second attention sub-module may include an activation layer, and the activation operation may be performed by the activation layer on the feature obtained after the first linear operation, to obtain the activated feature. The activation layer may be a relu layer, a leaky relu layer, a sigmoid layer, a tanh layer, or a Gelu layer, and the type of the activation layer is not limited, for example, a relu layer is selected as the activation layer. The second attention sub-module may include a linear layer 2. The second linear operation may be performed by the linear layer 2 on the activated feature to obtain the feature obtained after the second linear operation.

The output feature of the second attention sub-module is determined based on the input feature of the second attention sub-module and the feature obtained after the second linear operation. For example, matrix addition is performed on the input feature and the feature obtained after the second linear operation, to obtain the output feature.

At this point, the processing procedure of the second attention sub-module is completed, and the output feature of the second attention sub-module is obtained.

Embodiment 14: Based on Embodiment 6 or Embodiment 7, this embodiment further describes the second attention sub-module involved in the cascaded hybrid attention module. In Embodiment 6 and Embodiment 7, the cascaded hybrid attention module includes the second attention sub-module. The second attention sub-module is configured to perform the second processing on the input feature of the second attention sub-module to obtain the output feature of the second attention sub-module. For example, a downsampling operation is performed on the input feature of the second attention sub-module to obtain a downsampled feature. A residual convolution operation is performed on the downsampled feature to obtain a residual-convolved feature. An upsampling operation is performed on the residual-convolved feature to obtain an upsampled feature. And an activation operation is performed on the upsampled feature to obtain an activated feature. A residual convolution operation is performed on the input feature to obtain a convolution feature obtained after the residual convolution operation. The output feature of the second attention sub-module is determined based on the input feature, the activated feature and the convolution feature.

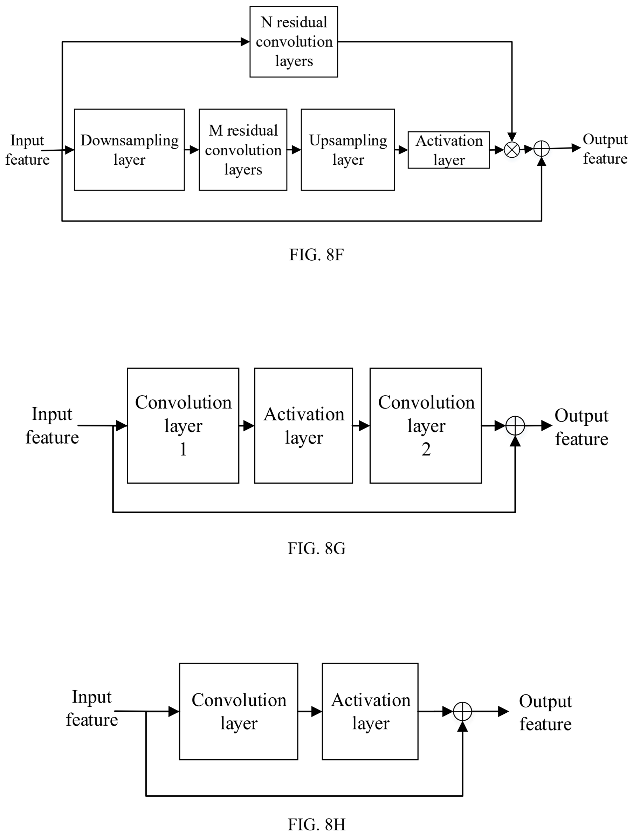

As shown in FIG. 8F, which is a schematic structural diagram of the second attention sub-module, which is only an example of the second attention sub-module. The structure of the second attention sub-module is not limited, and the following takes the second attention sub-module in FIG. 8F as an example for description.

Illustratively, the second attention sub-module may include a downsampling layer. And the downsampling layer may be a convolution layer with a kernel size of $3 \times 3$ and a stride of 2, or a convolution layer with a kernel size of $3 \times 3$ and a stride of 4, or a convolution layer with a kernel size of $4 \times 4$ and a stride of 2, or a convolution layer with a kernel size of $4 \times 4$ and a stride of 4, or a convolution layer with a kernel size of $5 \times 5$ and a stride of 2, or a convolution layer with a kernel size of $5 \times 5$ and a stride of 4, or the downsampling layer may be an inverse Pixel-Shuffle. A structure of the downsampling layer is not limited, for example, a convolution layer with a kernel size of $3 \times 3$ and a stride of 2 may be selected as the downsampling layer. On this basis, the downsampling operation may be performed by the downsampling layer on the input feature of the second attention sub-module, to obtain the downsampled feature, and the implementation of the downsampling operation is not limited.

The second attention sub-module may include M residual convolution layers, where M may be a positive integer, such as 1, 2, 3, 4, and the residual convolution operation may be performed on the downsampled feature by using the M residual convolution layers, to obtain the residual-convolved feature. For example, a residual convolution operation is performed by using the first residual convolution layer on the downsampled feature, to obtain a result, and a residual convolution operation is performed by using the second residual convolution layer on the result obtained after the residual convolution operation performed by using the first residual convolution layer, in a similar fashion, until the last residual convolution layer outputs the residual-convolved feature.

As shown in FIG. 8G, which is a schematic diagram of a structure of a residual convolution layer, where the residual convolution layer may include a convolution layer 1, an activation layer, and a convolution layer 2. First convolution processing may be performed on the input feature of the residual convolution layer by using the convolution layer 1, to obtain a feature obtained after the first convolution processing. Activation processing may be performed on the feature obtained after the first convolution processing by using the activation layer, to obtain a feature obtained after the activation processing. And second convolution processing may be performed on the feature obtained after the activation processing by using the convolution layer 2, to obtain a feature obtained after the second convolution processing. Then, matrix addition is performed on the input feature of the residual convolution layer and the feature obtained after the second convolution processing, to obtain the output feature of the residual convolution layer.

The convolution layer 1 may be a $1 \times 1$ convolution layer, a $3 \times 3$ convolution layer, a $5 \times 5$ convolution layer, or a $7 \times 7$ convolution layer, which is not limited, for example, a $3 \times 3$ convolution layer may be selected. The convolution layer 2 may be a $1 \times 1$ convolution layer, a $3 \times 3$ convolution layer, a $5 \times 5$ convolution layer, or a $7 \times 7$ convolution layer, which is not limited, for example, a $3 \times 3$ convolution layer may be selected. The activation layer may be a relu layer, a leaky relu layer, a sigmoid layer, a tanh layer, or a Gelu layer, which is not limited, for example, a relu layer or a sigmoid layer is selected.

As shown in FIG. 8H, which is a schematic diagram of another structure of a residual convolution layer, where the residual convolution layer may include a convolution layer and an activation layer. Convolution processing may be performed on the input feature of the residual convolution layer by using the convolution layer, to obtain a feature obtained after the convolution processing. Activation processing may be performed on the feature obtained after the convolution processing by using the activation layer, to obtain a feature obtained after the activation processing. Then, matrix addition is performed on the input feature of the residual convolution layer and the feature obtained after the activation processing, to obtain the output feature of the residual convolution layer.

The convolution layer may be a $1 \times 1$ convolution layer, a $3 \times 3$ convolution layer, a $5 \times 5$ convolution layer, or a $7 \times 7$ convolution layer, which is not limited, for example, a $3 \times 3$ convolution layer may be selected. The activation layer may be a relu layer, a leaky relu layer, a sigmoid layer, a tanh layer, or a Gelu layer, which is not limited, for example, a relu layer or a sigmoid layer is selected.

The second attention sub-module may include an upsampling layer. And the upsampling layer may be a deconvolution layer with a kernel size of 3×3 and a stride of 2, or a deconvolution layer with a kernel size of 3×3 and a stride of 4, or a deconvolution layer with a kernel size of 4×4 and a stride of 2, or a deconvolution layer with a kernel size of 4×4 and a stride of 4, or a deconvolution layer with a kernel size of 5×5 and a stride of 2, or a convolution layer with a kernel size of 5×5 and a stride of 4, or the upsampling layer may be an inverse PixelShuffle. A structure of the upsampling layer is not limited, for example, a deconvolution layer with a kernel size of 4×4 and a stride of 2 may be selected as the upsampling layer. On this basis, an upsampling operation may be performed on the residual-convolved feature (i.e., the feature obtained after the residual convolution operations are performed by using the M residual convolution layers) by using the upsampling layer, to obtain an upsampled feature. The implementation of the upsampling operation is not limited.

The second attention sub-module may include an activation layer. And the activation layer may be a relu layer, a leaky relu layer, a sigmoid layer, a tanh layer, or a Gelu layer. The structure of the activation layer is not limited, for example, a relu layer may be selected. On this basis, the activation operation may be performed on the upsampled feature by using the activation layer to obtain the activated feature.

The second attention sub-module may include N residual convolution layers, where N may be a positive integer, such as 1, 2, 3, 4, and N and M may be the same or different. The residual convolution operation may be performed on the input feature of the second attention sub-module by using the N residual convolution layers to obtain the convolution feature obtained after the residual convolution operation. For example, a residual convolution operation is performed by using the first residual convolution layer on the input feature of the second attention sub-module, to obtain a result, and a residual convolution operation is performed by using the second residual convolution layer on the result obtained after the residual convolution operation performed by using the first residual convolution layer, in a similar fashion, until the last residual convolution layer outputs the convolution feature obtained after the residual convolution operation.

As shown in FIG. 8G, which is a schematic diagram of a structure of a residual convolution layer, and the residual convolution layer may include a convolution layer 1, an activation layer, and a convolution layer 2. As shown in FIG. 8H, which is another schematic structural diagram of a residual convolution layer, where the residual convolution layer may include a convolution layer and an activation layer. Any one of the foregoing residual convolution layers may be used to perform a residual convolution operation, which will not be repeated.

Referring to FIG. 8F, after the convolution feature obtained after the residual convolution operation(that is, the feature output after the residual convolution operations are performed by the N residual convolution layers) and the activated feature (that is, the feature output after the activation operation is performed by the activation layer) are obtained, the output feature of the second attention sub-module may be determined based on the input feature of the second attention sub-module, the activated feature, and the convolution feature obtained after the residual convolution operation. For example, matrix multiplication may be performed on the activated feature and the convolution feature obtained after the residual convolution operation, and matrix addition may be performed on the result of the matrix multiplication and the input feature of the second attention sub-module, to obtain the output feature of the second attention sub-module.

At this point, the processing procedure of the second attention sub-module is completed, and the output feature of the second attention sub-module is obtained.

In Embodiment 12 to Embodiment 14, several examples of the second attention sub-module are provided, and the structure of the second attention sub-module is not limited in the present disclosure, as long as the second processing may be performed on the input feature to obtain the output feature.

Embodiment 15: an implementation of this embodiment is the same as that of the Embodiment 1, Embodiment 2, Embodiment 3, or Embodiment 4, and details are not described again. The synthetic transform network involved therein is described in detail below.

In Embodiment 1, Embodiment 2, Embodiment 3, and Embodiment 4, the synthetic transform network is involved, and the synthetic transform network may at least include an attention module, and the attention module may be a first attention sub-module. In addition to the first attention sub-module, the synthetic transform network may further include other network layers. The structure of the synthetic transform network is not limited in this embodiment, as long as the synthetic transform network includes the first attention sub-module. For example, the synthetic transform network may further include at least one deconvolution layer, and the first attention sub-module may be located behind any one of the deconvolution layers. In an embodiment, the first attention sub-module may be located behind each deconvolution layer. In an embodiment, the first attention sub-module may be located behind a part of the deconvolution layers (for example, K deconvolution layers in all deconvolution layers, where K is greater than 1, and K is less than the total quantity of deconvolution layers).

Illustratively, the first attention sub-module is configured to perform the first processing on the input feature of the first attention sub-module, to obtain the output feature of the first attention sub-module. In a possible implementation, the structure of the first attention sub-module may refer to Embodiment 8, in another possible implementation, the structure of the first attention sub-module may refer to Embodiment 9, in another possible implementation, the structure of the first attention sub-module may refer to Embodiment 10, in another possible implementation, the structure of the first attention sub-module may refer to Embodiment 11. Of course, the above are only several examples of the first attention sub-module, and the structure of the first attention sub-module is not limited.

Embodiment 16: an implementation of this embodiment is the same as that of the Embodiment 1, Embodiment 2, Embodiment 3, or Embodiment 4, and details are not described again. The synthetic transform network involved therein is described in detail below.

In Embodiment 1, Embodiment 2, Embodiment 3, and Embodiment 4, the synthetic transform network is involved, and the synthetic transform network may at least include an attention module, and the attention module may be a second attention sub-module. Of course, in addition to the second attention sub-module, the synthetic transform network may further include other network layers. The structure of the synthetic transform network is not limited in this embodiment, as long as the synthetic transform network includes the second attention sub-module. For example, the synthetic transform network may further include at least one deconvolution layer, and the second attention sub-module may be located behind any one of the deconvolution layers. In an embodiment, the second attention sub-module is located behind each deconvolution layer. In an embodiment, the second attention sub-module is located behind a part of the deconvolution layers (for example, K deconvolution layers in all deconvolution layers, where K is greater than 1, and K is less than the total quantity of deconvolution layers).

Illustratively, the second attention sub-module is configured to perform the second processing on the input feature of the second attention sub-module, to obtain the output feature of the second attention sub-module. In a possible implementation, the structure of the second attention sub-module may refer to Embodiment 12, in another possible implementation, the structure of the second attention sub-module may refer to Embodiment 13, in another possible implementation, the structure of the second attention sub-module may refer to Embodiment 14. Of course, the above are only several examples of the second attention sub-module, and the structure of the second attention sub-module is not limited.

It can be learned from the foregoing technical solutions that, in embodiments of the present disclosure, for neural network-based encoding and decoding technologies, a synthetic transform network based on an attention mechanism is provided, where the synthetic transform network includes an attention module, and the attention module is a cascaded hybrid attention module. When the synthetic transform network is implemented by using the cascaded hybrid attention module, network complexity and calculation complexity are effectively reduced while quality of a synthesized picture is ensured, decoding performance is improved, and quality of a reconstructed picture block is effectively ensured while complexity is reduced, encoding performance and decoding performance are improved. By replacing the residual non-local attention block with a hybrid attention module (cascaded hybrid attention module), the computational complexity of the decoder is greatly reduced. For example, the second attention sub-module in the hybrid attention module only occupies calculation complexity of 21K times of floating-point multiply-add operations/pixel. And the complexity of the first attention sub-module is also much lower than that of the residual non-local attention block. In addition, the second attention sub-module plays a role of an attention mechanism in the residual non-local attention block, and brings excellent performance due to the introduction of a transformer structure with better performance. The convolution operation of 7*7 in the second attention sub-module plays a role of introducing non-local information in the residual non-local attention block. And the dropout layer in the second attention sub-module plays a role of increasing network robustness. Based on the foregoing functions, the cascaded hybrid attention module reduces the computational complexity without excessive performance loss.

Illustratively, the foregoing embodiments may be implemented separately, or may be implemented in combination. For example, each of the embodiments 1 to 17 may be separately implemented, and at least two of the embodiments 1 to 16 may be implemented in combination.

Illustratively, in the foregoing embodiments, content of the encoder may also be applied to the decoder, that is, the decoder may perform processing in a same manner with the encoder. And content of the decoder may also be applied to the encoder, that is, the encoder may perform processing in a same manner with the decoder.

Based on a same concept as the foregoing method, a decoding apparatus is further provided by an embodiment of this disclosure. Where the decoding apparatus is applied to a decoder, and the decoding apparatus includes: a memory configured to store video data; and a decoder configured to implement the decoding methods in Embodiment 1 to Embodiment 16, i.e., a processing procedure of the decoder.

For example, in a possible implementation, the decoder is configured to: decode a bitstream corresponding to a current picture block to obtain a coefficient hyperparameter feature corresponding to the current picture block; determine a probability distribution parameter based on the coefficient hyperparameter feature, decode another bitstream corresponding to the current picture block based on the probability distribution parameter to obtain a reconstructed feature corresponding to the current picture block; and input the reconstructed feature into a synthetic transform network to obtain a reconstructed picture block corresponding to the current picture block; where the synthetic transform network at least includes an attention module, and the attention module is a cascaded hybrid attention module; where the cascaded hybrid attention module includes a first attention sub-module and a second attention sub-module which are two sub-modules connected in series.

Based on a same concept as the foregoing method, an encoding apparatus is further provided by an embodiment of this disclosure. Where the encoding apparatus is applied to an encoder, and the encoding apparatus includes: a memory configured to store video data; and an encoder configured to implement the encoding methods in Embodiment 1 to Embodiment 16, i.e., a processing procedure of the encoder.

For example, in a possible implementation, the encoder is configured to: decode a bitstream corresponding to a current picture block to obtain a coefficient hyperparameter feature corresponding to the current picture block; determine a probability distribution parameter based on the coefficient hyperparameter feature, decode another bitstream corresponding to the current picture block based on the probability distribution parameter to obtain a reconstructed feature corresponding to the current picture block; and input the reconstructed feature into a synthetic transform network to obtain a reconstructed picture block corresponding to the current picture block; where the synthetic transform network at least includes an attention module, and the attention module is a cascaded hybrid attention module; where the cascaded hybrid attention module includes a first attention sub-module and a second attention sub-module which are two sub-modules connected in series.

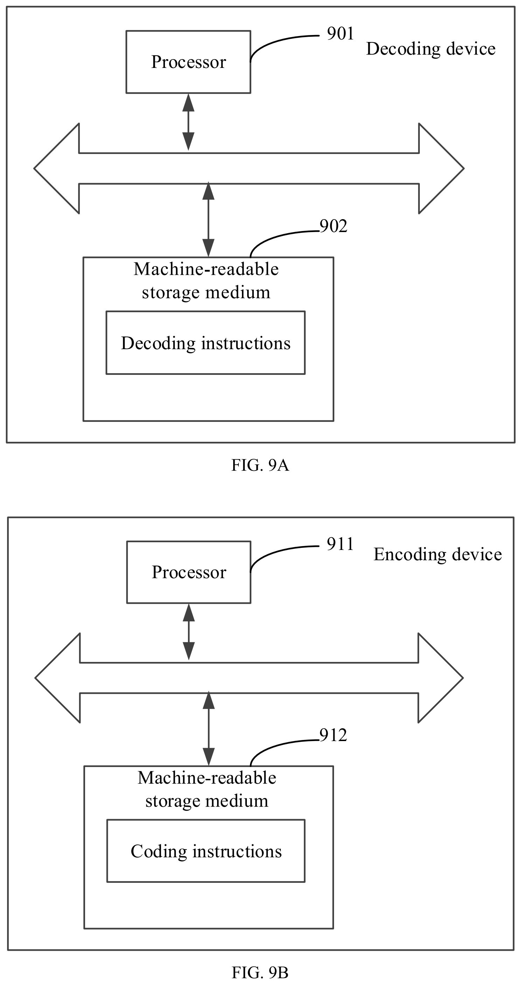

Based on a same concept as the foregoing method, a decoding device (which may also be referred to as a video decoder) is provided by an embodiment of this disclosure. From a hardware level, a schematic diagram of a hardware architecture of the decoding device may be specifically shown in FIG. 9A. The decoding device includes: a processor 901 and a machine-readable storage medium 902, where the machine-readable storage medium 902 stores machine-executable instructions executable by the processor 901; and the processor 901 is configured to execute the machine-executable instructions to implement the decoding method described in the above Embodiments 1-17 of the present disclosure.

The machine-readable storage medium 902 may be any electronic, magnetic, optical, or other physical storage device that may contain or store information, such as executable instructions, data, etc. For example, the machine-readable storage medium may be a Radom Access Memory (RAM), a volatile memory, a non-volatile memory, a flash memory, a storage drive (such as a hard disk drive), a solid-state drive, any type of storage disk (such as an optical disk, dvd, etc.), or a similar storage medium, or a combination thereof.

Based on a same concept as the foregoing method, an encoding device (which may also be referred to as a video encoder) is provided by an embodiment of this disclosure. From a hardware level, a schematic diagram of a hardware architecture of the encoding device may be specifically shown in FIG. 9B. The encoding device includes: a processor 911 and a machine-readable storage medium 912, where the machine-readable storage medium 912 stores machine-executable instructions executable by the processor 911; and the processor 911 is configured to execute the machine-executable instructions to implement the encoding method described in the above Embodiments 1-17 of the present disclosure.

The machine-readable storage medium 912 may be any electronic, magnetic, optical, or other physical storage device that may contain or store information, such as executable instructions, data, etc. For example, the machine-readable storage medium may be a RAM, a volatile memory, a non-volatile memory, a flash memory, a storage drive (such as a hard disk drive), a solid-state drive, any type of storage disk (such as an optical disk, dvd, etc.), or a similar storage medium, or a combination thereof.

Based on a same concept as the foregoing method, an electronic device is provided by an embodiment of this disclosure. The electronic device includes: a processor and a machine-readable storage medium, where the machine-readable storage medium stores machine-executable instructions executable by the processor; and the processor is configured to execute the machine-executable instructions to implement the decoding methods or the encoding methods described in the above Embodiments 1-16 of the present disclosure.

Based on a same concept as the foregoing method, a machine-readable storage medium is further provided by an embodiment of this disclosure. Where the machine-readable storage medium stores a plurality of computer instructions, and when the computer instructions are executed by a processor, the decoding methods or the encoding methods in the above Embodiments 1-16 of the present disclosure are implemented, for example, the decoding methods or the encoding methods disclosed in the foregoing embodiment of this disclosure are implemented. For example, the machine-readable storage medium may be a ROM, a RAM, a CD-ROM, a magnetic tape, a floppy disk, an optical data storage device, and the like.

Based on a same concept as the foregoing method, a computer application program is further provided by an embodiment of this disclosure. When the computer application program is executed by a processor, the decoding methods or the encoding methods disclosed in the foregoing examples of this disclosure can be implemented.

Based on a same concept as the foregoing method, a decoding apparatus is further provided by an embodiment of this disclosure. The decoding apparatus may be applied to a decoder. The decoding apparatus includes: a decoding module, configured to: decode a bitstream corresponding to a current picture block to obtain a coefficient hyperparameter feature corresponding to the current picture block, determine a probability distribution parameter based on the coefficient hyperparameter feature, and decode another bitstream corresponding to the current picture block based on the probability distribution parameter to obtain a reconstructed feature corresponding to the current picture block; and a processing module, configured to input the reconstructed feature into a synthetic transform network to obtain a reconstructed picture block corresponding to the current picture block; where the synthetic transform network at least includes an attention module, and the attention module is a cascaded hybrid attention module; where the cascaded hybrid attention module includes a first attention sub-module and a second attention sub-module which are two sub-modules connected in series.

Illustratively, in response to the attention module being the cascaded hybrid attention module, the processing module is further configured to perform, by using the first attention sub-module, first processing on an input feature of the first attention sub-module, to obtain an output feature of the first attention sub-module, where the output feature of the first attention sub-module is an input feature of the second attention sub-module; and the first processing includes at least one of: layer normalization, a convolution operation, and a dimension transform operation; and perform, by using the second attention sub-module, second processing on the input feature of the second attention sub-module, to obtain an output feature of the second attention sub-module, where the second processing includes at least one of: a depthwise separable convolution operation, layer normalization, a multi-layer perception operation, a linear operation, an activation operation, a downsampling operation, a residual convolution operation, and an upsampling operation.

Illustratively, when performing, by using the first attention sub-module, the first processing on the input feature of the first attention sub-module, to obtain the output feature of the first attention sub-module, the processing module is configured to: perform the layer normalization on the input feature of the first attention sub-module to obtain a layer-normalized feature; perform three-way convolution operations on the layer-normalized feature to obtain a query vector, a key vector and a value vector; perform the dimension transform operation on the query vector, the key vector, and the value vector respectively, to obtain a dimension-transformed query vector, a dimension-transformed key vector, and a dimension-transformed value vector; determine an attention weight based on the dimension-transformed query vector and the dimension-transformed key vector, and determine a correction feature corresponding to the input feature based on the attention weight and the dimension-transformed value vector; and determine the output feature of the first attention sub-module based on the input feature and the correction feature.

Illustratively, when performing, by using the first attention sub-module, the first processing on the input feature of the first attention sub-module, to obtain the output feature of the first attention sub-module, the processing module is specifically configured to: perform the layer normalization on the input feature of the first attention sub-module to obtain a layer-normalized feature; perform window partition on the layer-normalized feature to obtain a plurality of small-scale features; for each small-scale feature, perform three-way convolution operations on the small-scale feature to obtain a small-scale query feature, a small-scale key feature, and a small-scale value feature corresponding to the small-scale feature; concatenate the small-scale query features corresponding to the plurality of small-scale features to obtain a query vector; concatenate the small-scale key features corresponding to the plurality of small-scale features to obtain a key vector; and concatenate the small-scale value features corresponding to the plurality of small-scale features to obtain a value vector; perform the dimension transform operation on the query vector, the key vector, and the value vector respectively, to obtain a dimension-transformed query vector, a dimension-transformed key vector, and a dimension-transformed value vector; determine an attention weight based on the dimension-transformed query vector and the dimension-transformed key vector, and determine a correction feature corresponding to the input feature based on the attention weight and the dimension-transformed value vector; and determine the output feature of the first attention sub-module based on the input feature and the correction feature.

Illustratively, when performing, by using the first attention sub-module, the first processing on the input feature of the first attention sub-module, to obtain the output feature of the first attention sub-module, the processing module is specifically configured to: perform the layer normalization on the input feature of the first attention sub-module to obtain a layer-normalized feature; perform three-way convolution operations on the layer-normalized feature to obtain a query vector, a key vector and a value vector; determine an attention weight based on the query vector and the key vector, and determine a correction feature corresponding to the input feature based on the attention weight and the value vector; and determine the output feature of the first attention sub-module based on the input feature and the correction feature.

Illustratively, when performing, by using the first attention sub-module, the first processing on the input feature of the first attention sub-module, to obtain the output feature of the first attention sub-module, the processing module is specifically configured to: perform the layer normalization on the input feature of the first attention sub-module to obtain a layer-normalized feature; perform window partition on the layer-normalized feature to obtain a plurality of small-scale features; for each small-scale feature, perform three-way convolution operations on the small-scale feature to obtain a small-scale query feature, a small-scale key feature, and a small-scale value feature corresponding to the small-scale feature; concatenate the small-scale query features corresponding to the plurality of small-scale features to obtain a query vector; concatenate the small-scale key features corresponding to the plurality of small-scale features to obtain a key vector; and concatenate the small-scale value features corresponding to the plurality of small-scale features to obtain a value vector; determine an attention weight based on the query vector and the key vector, and determine a correction feature corresponding to the input feature based on the attention weight and the value vector; and determine the output feature of the first attention sub-module based on the input feature and the correction feature.

Illustratively, when performing, by using the second attention sub-module, the second processing on the input feature of the second attention sub-module, to obtain the output feature of the second attention sub-module, the processing module is specifically configured to: perform the layer normalization on the input feature of the second attention sub-module to obtain a layer-normalized feature; perform a first linear operation on the layer-normalized feature to obtain a feature obtained after the first linear operation; perform the activation operation on the feature obtained after the first linear operation to obtain an activated feature; perform a second linear operation on the activated feature to obtain a feature obtained after the second linear operation; and determine the output feature of the second attention sub-module based on the input feature and the feature obtained after the second linear operation.

Illustratively, when performing, by using the second attention sub-module, the second processing on the input feature of the second attention sub-module, to obtain the output feature of the second attention sub-module, the processing module is specifically configured to: perform the downsampling operation on the input feature of the second attention sub-module to obtain a downsampled feature; perform the residual convolution operation on the downsampled feature to obtain a residual-convolved feature; perform the upsampling operation on the residual-convolved feature to obtain an upsampled feature; and perform the activation operation on the upsampled feature to obtain an activated feature; and perform the residual convolution operation on the input feature to obtain a convolution feature obtained after the residual convolution operation; and determine the output feature of the second attention sub-module based on the input feature of the second attention sub-module, the activated feature and the convolution feature.

Illustratively, the synthetic transform network may further include at least one deconvolution layer, where the attention module is located behind one of the deconvolution layers.

Illustratively, the synthetic transform network further includes a residual layer, a first deconvolution layer, a first clipping layer, a first residual activation layer, a second deconvolution layer, a second clipping layer, a second residual activation layer, a third deconvolution layer, a third clipping layer, a third residual activation layer, a fourth deconvolution layer, and a fourth clipping layer. The synthetic transform network comprises at least one attention module, where one of the attention modules is located behind the first deconvolution layer.

Based on a same concept as the foregoing method, an encoding apparatus is further provided by an embodiment of this disclosure. The encoding apparatus is applied to an encoder. The encoding apparatus includes: a decoding module, configured to: decode a bitstream corresponding to a current picture block to obtain a coefficient hyperparameter feature corresponding to the current picture block, determine a probability distribution parameter based on the coefficient hyperparameter feature, and decode another bitstream corresponding to the current picture block based on the probability distribution parameter to obtain a reconstructed feature corresponding to the current picture block; and a processing module, configured to input the reconstructed feature into a synthetic transform network to obtain a reconstructed picture block corresponding to the current picture block; where the synthetic transform network at least includes an attention module, and the attention module is a cascaded hybrid attention module; where the cascaded hybrid attention module includes a first attention sub-module and a second attention sub-module which are two sub-modules connected in series.

A person skilled in the art should understand that the embodiments of this disclosure may be provided as a method, a system, or a computer program product. The present disclosure may take the form of an entirely hardware embodiment, an entirely software embodiment, or an embodiment combining software and hardware aspects. The embodiments of this disclosure may be in a form of a computer program product implemented on one or more computer-usable storage media (including but not limited to a disk memory, a CD-ROM, an optical memory, and the like) that include computer-usable program codes. The foregoing descriptions are merely embodiments of this disclosure, and are not intended to limit this disclosure.

For a person skilled in the art, this disclosure may have various modifications and changes. Any modification, equivalent replacement, improvement, etc. made within the spirit and principle of the present disclosure should be included in the scope of the claims of the present disclosure.

**Claims**

1. A decoding method, applied to a decoder, comprising:

decoding a bitstream corresponding to a current picture block to obtain a coefficient hyperparameter feature corresponding to the current picture block, determining a probability distribution parameter based on the coefficient hyperparameter feature, and decoding another bitstream corresponding to the current picture block based on the probability distribution parameter to obtain a reconstructed feature corresponding to the current picture block; and

inputting the reconstructed feature into a synthetic transform network to obtain a reconstructed picture block corresponding to the current picture block;

wherein the synthetic transform network at least comprises an attention module, and the attention module is a cascaded hybrid attention module; and

wherein the cascaded hybrid attention module comprises a first attention sub-module and a second attention sub-module which are two sub-modules connected in series.

2. The method according to claim 1, wherein in response to the attention module being the cascaded hybrid attention module, the method further comprises:

performing, by using the first attention sub-module, first processing on an input feature of the first attention sub-module, to obtain an output feature of the first attention sub-module, wherein the output feature of the first attention sub-module is an input feature of the second attention sub-module, and the first processing comprises at least one of: layer normalization, a convolution operation, and a dimension transform operation; and

performing, by using the second attention sub-module, second processing on the input feature of the second attention sub-module, to obtain an output feature of the second attention sub-module, wherein the second processing comprises at least one of: a depthwise separable convolution operation, layer normalization, a multi-layer perception operation, a linear operation, an activation operation, a downsampling operation, a residual convolution operation, and an upsampling operation.

3. The method according to claim 2, wherein the performing, by using the first attention sub-module, the first processing on the input feature of the first attention sub-module, to obtain the output feature of the first attention sub-module comprises:

performing the layer normalization on the input feature of the first attention sub-module to obtain a layer-normalized feature;

performing three-way convolution operations on the layer-normalized feature to obtain a query vector, a key vector and a value vector;

performing the dimension transform operation on the query vector, the key vector, and the value vector respectively, to obtain a dimension-transformed query vector, a dimension-transformed key vector, and a dimension-transformed value vector;

determining an attention weight based on the dimension-transformed query vector and the dimension-transformed key vector, and determining a correction feature corresponding to the input feature based on the attention weight and the dimension-transformed value vector; and

determining the output feature of the first attention sub-module based on the input feature and the correction feature.

4. The method according to claim 2, wherein the performing, by using the first attention sub-module, the first processing on the input feature of the first attention sub-module, to obtain the output feature of the first attention sub-module comprises:

performing the layer normalization on the input feature of the first attention sub-module to obtain a layer-normalized feature;

performing window partition on the layer-normalized feature to obtain a plurality of small-scale features;

for each small-scale feature, performing three-way convolution operations on the small-scale feature to obtain a small-scale query feature corresponding to the small-scale feature, a small-scale key feature corresponding to the small-scale feature, and a small-scale value feature corresponding to the small-scale feature; concatenating the small-scale query features corresponding to the plurality of small-scale features to obtain a query vector; concatenating the small-scale key features corresponding to the plurality of small-scale features to obtain a key vector; and concatenating the small-scale value features corresponding to the plurality of small-scale features to obtain a value vector;

performing the dimension transform operation on the query vector, the key vector, and the value vector respectively, to obtain a dimension-transformed query vector, a dimension-transformed key vector, and a dimension-transformed value vector;

determining an attention weight based on the dimension-transformed query vector and the dimension-transformed key vector, and determining a correction feature corresponding to the input feature based on the attention weight and the dimension-transformed value vector; and determining the output feature of the first attention sub-module based on the input feature and the correction feature.

5. The method according to claim 2, wherein the performing, by using the first attention sub-module, the first processing on the input feature of the first attention sub-module, to obtain the output feature of the first attention sub-module comprises:

performing the layer normalization on the input feature of the first attention sub-module to obtain a layer-normalized feature;
performing three-way convolution operations on the layer-normalized feature to obtain a query vector, a key vector and a value vector;
determining an attention weight based on the query vector and the key vector, and determining a correction feature corresponding to the input feature based on the attention weight and the value vector; and
determining the output feature of the first attention sub-module based on the input feature and the correction feature.

6. The method according to claim 2, wherein the performing, by using the first attention sub-module, the first processing on the input feature of the first attention sub-module, to obtain the output feature of the first attention sub-module comprises:

performing the layer normalization on the input feature of the first attention sub-module to obtain a layer-normalized feature;
performing window partition on the layer-normalized feature to obtain a plurality of small-scale features;
for each small-scale feature, performing three-way convolution operations on the small-scale feature to obtain a small-scale query feature corresponding to the small-scale feature, a small-scale key feature corresponding to the small-scale feature, and a small-scale value feature corresponding to the small-scale feature; concatenating the small-scale query features corresponding to the plurality of small-scale features to obtain a query vector; concatenating the small-scale key features corresponding to the plurality of small-scale features to obtain a key vector; and concatenating the small-scale value features corresponding to the plurality of small-scale features to obtain a value vector;
determining an attention weight based on the query vector and the key vector, and determining a correction feature corresponding to the input feature based on the attention weight and the value vector; and
determining the output feature of the first attention sub-module based on the input feature and the correction feature.

7. The method according to claim 2, wherein the performing, by using the second attention sub-module, the second processing on the input feature of the second attention sub-module, to obtain the output feature of the second attention sub-module comprises:

performing the layer normalization on the input feature of the second attention sub-module to obtain a layer-normalized feature;
performing a first linear operation on the layer-normalized feature to obtain a feature obtained after the first linear operation;
performing the activation operation on the feature obtained after the first linear operation to obtain an activated feature;
performing a second linear operation on the activated feature to obtain a feature obtained after the second linear operation; and
determining the output feature of the second attention sub-module based on the input feature and the feature obtained after the second linear operation.

8. The method according to claim 2, wherein the performing, by using the second attention sub-module, the second processing on the input feature of the second attention sub-module, to obtain the output feature of the second attention sub-module comprises:

performing the downsampling operation on the input feature of the second attention sub-module to obtain a downsampled feature; performing the residual convolution operation on the downsampled feature to obtain a residual-convolved feature; performing the upsampling operation on the residual-convolved feature to obtain an upsampled feature; and performing the activation operation on the upsampled feature to obtain an activated feature;
performing the residual convolution operation on the input feature to obtain a convolution feature obtained after the residual convolution operation; and
determining the output feature of the second attention sub-module based on the input feature, the activated feature and the convolution feature.

9. The method according to any one of claims 1-8, wherein

the synthetic transform network further comprises at least one deconvolution layer; and the attention module is located behind one of the deconvolution layers.

10. The method according to claim 9, wherein the synthetic transform network further comprises a residual layer, a first deconvolution layer, a first clipping layer, a first residual activation layer, a second deconvolution layer, a second clipping layer, a second residual activation layer, a third deconvolution layer, a third clipping layer, a third residual activation layer, a fourth deconvolution layer, and a fourth clipping layer;
the synthetic transform network comprises at least one attention module, wherein one of the attention modules is located behind the first deconvolution layer.

11. An encoding method, applied to an encoder, comprising:

decoding a bitstream corresponding to a current picture block to obtain a coefficient hyperparameter feature corresponding to the current picture block,
determining a probability distribution parameter based on the coefficient hyperparameter feature, and decoding another bitstream corresponding to the current picture block based on the probability distribution parameter to obtain a reconstructed feature corresponding to the current picture block; and
inputting the reconstructed feature into a synthetic transform network to obtain a reconstructed picture block corresponding to the current picture block;
wherein the synthetic transform network at least comprises an attention module, and the attention module is a cascaded hybrid attention module; wherein the cascaded hybrid attention module comprises a first attention sub-module and a second attention sub-module which are two sub-modules connected in series.

12. A decoding apparatus, applied to a decoder, comprising:

a decoding module, configured to: decode a bitstream corresponding to a current picture block to obtain a coefficient hyperparameter feature corresponding to the current picture block, determine a probability distribution parameter based on the coefficient hyperparameter feature, and decode another bitstream corresponding to the current picture block based on the probability distribution parameter to obtain a reconstructed feature corresponding to the current picture block; and
a processing module, configured to input the reconstructed feature into a synthetic transform network to obtain a reconstructed picture block corresponding to the current picture block; wherein the synthetic transform network at least comprises an attention module, and the attention module is a cascaded hybrid attention module; wherein the cascaded hybrid attention module comprises a first attention sub-module and a second attention sub-module which are two sub-modules connected in series.

13. An encoding apparatus, applied to an encoder, comprising:

a decoding module, configured to: decode a bitstream corresponding to a current picture block to obtain a coefficient hyperparameter feature corresponding to the current picture block, determine a probability distribution parameter based on the coefficient hyperparameter feature, and decode another bitstream corresponding to the current picture block based on the probability distribution parameter to obtain a reconstructed feature corresponding to the current picture block; and
a processing module, configured to input the reconstructed feature into a synthetic transform network to obtain a reconstructed picture block corresponding to the current picture block; wherein the synthetic transform network at least comprises an attention module, and the attention module is a cascaded hybrid attention module; wherein the cascaded hybrid attention module comprises a first attention sub-module and a second attention sub-module which are two sub-modules connected in series.

14. A decoding device, comprising one or more processors and a machine-readable storage medium, wherein the machine-readable storage medium stores machine-executable instructions executable by the one or more processors;
the one or more processors are configured to execute the machine-executable instructions to implement the method according to any one of claims 1-10.

15. An encoding device, comprising one or more processors and a machine-readable storage medium, wherein the machine-readable storage medium stores machine-executable instructions executable by the one or more processors;
the one or more processors are configured to execute the machine-executable instructions to implement the method according to claim 11.

**16.** An electronic device, comprising: one or more processors and a machine-readable storage medium, wherein the machine-readable storage medium stores machine-executable instructions executable by the one or more processors;

the one or more processors are configured to execute the machine-executable instructions to implement the method according to any one of claims 1-11.

**17.** A machine-readable storage medium, wherein the machine-readable storage medium stores a plurality of computer instructions, and when the computer instructions are executed by one or more processors, the method according to any one of claims 1-11 is implemented.

**18.** A computer application program, wherein when the computer application program is executed by one or more processors, the method of any one of claims 1-11 is implemented.

FIG. 1

FIG. 2

Decode a bitstream corresponding to a current picture block, to obtain a coefficient hyperparameter feature corresponding to the current picture block
— 301

Determine a probability distribution parameter based on the coefficient hyperparameter feature, and decode another bitstream corresponding to the current picture block based on the probability distribution parameter to obtain a reconstructed feature corresponding to the current picture block
— 302

Input the reconstructed feature into a synthetic transform network to obtain a reconstructed picture block corresponding to the current picture block; where the synthetic transform network at least includes an attention module, and the attention module may be a cascaded hybrid attention module
— 303

FIG. 3

FIG. 4

Bitstream #2 ← Mean prediction network ← Bitstream #1

AD &IQ → z_hat

Feature recovery → AD &IQ

r_hat → ⊕ → mu → p → Probability hyperparameter decoding network → z_hat

y_hat → z_hat

x_hat ← Synthetic transform network

FIG. 5

Input feature → Residual layer → Deconvolution layer → Clipping layer → Residual activation layer → Deconvolution layer → Clipping layer → Residual activation layer → Deconvolution layer → Attention model → Clipping layer → Residual activation layer → Deconvolution layer → Clipping layer → Reconstructed picture block

FIG. 6A

FIG. 6B

FIG. 6C

FIG. 6D

FIG. 7A

图 7B

FIG. 8A

FIG. 8B

FIG. 8C

FIG. 8D

FIG. 8E

FIG. 8F

FIG. 8G

FIG. 8H

Processor — 901    Decoding device

Machine-readable
storage medium — 902

Decoding instructions

FIG. 9A

Processor — 911    Encoding device

Machine-readable
storage medium — 912

Coding instructions

FIG. 9B

## INTERNATIONAL SEARCH REPORT

| International application No. |
| --- |
| **PCT/CN2024/096404** |

**A. CLASSIFICATION OF SUBJECT MATTER**

H04N 19/44(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, VEN, DWPI, CNTXT, EPTXT, USTXT, JPTXT, IEEE, CNKI, 百度, BAIDU: 编码, 解码, 重建, 重构, 码流, 注意力, 级联, 串联, 串行, 神经网络, 超参, 合成, 变换, code, decode, reconstruction, concatenation, attention, neural, network, hyper, parameter

**C. DOCUMENTS CONSIDERED TO BE RELEVANT**

| Category* | Citation of document, with indication, where appropriate, of the relevant passages | Relevant to claim No. |
| --- | --- | --- |
| A | CN 116016954 A (ZHEJIANG DAHUA TECHNOLOGY CO., LTD.) 25 April 2023 (2023-04-25)<br>description, paragraphs [0088]-[0117], and figures 1-4 | 1-18 |
| A | CN 115484459 A (TSINGHUA UNIVERSITY) 16 December 2022 (2022-12-16)<br>entire document | 1-18 |
| A | CN 115118972 A (HUAWEI TECHNOLOGIES CO., LTD.) 27 September 2022 (2022-09-27)<br>entire document | 1-18 |
| A | US 2022286696 A1 (SAMSUNG ELECTRONICS CO., LTD.) 08 September 2022 (2022-09-08)<br>entire document | 1-18 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 August 2024** | **14 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/096404** |

| Patent document cited in search report | | | Publication date (day/month/year) | Patent family member(s) | | | Publication date (day/month/year) |
| --- | --- | --- | --- | --- | --- | --- | --- |
| CN | 116016954 | A | 25 April 2023 | None | | | |
| CN | 115484459 | A | 16 December 2022 | None | | | |
| CN | 115118972 | A | 27 September 2022 | US | 2024007637 | A1 | 04 January 2024 |
| US | 2022286696 | A1 | 08 September 2022 | KR | 20220124622 | A | 14 September 2022 |

Form PCT/ISA/210 (patent family annex) (July 2022)